(19)

Europäisches
Patentamt
European
Patent Office
Office européen
des brevets

(11) **EP 3 541 034 B1**

(12) **EUROPEAN PATENT SPECIFICATION**

(45) Date of publication and mention
of the grant of the patent:
**15.06.2022 Bulletin 2022/24**

(21) Application number: **17869735.5**

(22) Date of filing: **09.11.2017**

(51) International Patent Classification (IPC):
*H04L 27/34* (2006.01)     *H04L 27/36* (2006.01)

(52) Cooperative Patent Classification (CPC):
**H04L 27/3488;** H04L 27/363

(86) International application number:
**PCT/CN2017/110198**

(87) International publication number:
**WO 2018/086560 (17.05.2018 Gazette 2018/20)**

(54) **METHOD AND DEVICE FOR GENERATING JOINT MODULATION SYMBOL, AND TRANSMITTER**

VERFAHREN UND VORRICHTUNG ZUR ERZEUGUNG EINES GEMEINSAMEN
MODULATIONSSYMBOLS UND SENDER

PROCÉDÉ ET DISPOSITIF DE GÉNÉRATION DE SYMBOLE DE MODULATION COMMUN, ET
ÉMETTEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.11.2016 CN 201611000996**

(43) Date of publication of application:
**18.09.2019 Bulletin 2019/38**

(73) Proprietor: **ZTE Corporation
Shenzhen, Guangdong 518057 (CN)**

(72) Inventors:
• **TANG, Hong**
  **Shenzhen**
  **Guangdong 518057 (CN)**
• **YUAN, Zhifeng**
  **Shenzhen**
  **Guangdong 518057 (CN)**
• **DAI, Jianqiang**
  **Shenzhen**
  **Guangdong 518057 (CN)**
• **YUAN, Yifei**
  **Shenzhen**
  **Guangdong 518057 (CN)**

(74) Representative: **Regimbeau
20, rue de Chazelles
75847 Paris Cedex 17 (FR)**

(56) References cited:
**WO-A1-2016/164069     CN-A- 105 703 877**

• **ERICSSON: "Introduction of MUST", 3GPP
DRAFT; R1-1612303 36.211 CR MUST, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE , vol. TSG RAN, no. Reno, NV,
USA; 20161114 - 20161118 13 November 2016
(2016-11-13), XP051176252, Retrieved from the
Internet:
URL:http://www.3gpp.org/ftp/Meetings_3GPP_
SYNC/RAN1/Docs/ [retrieved on 2016-11-13]**
• **NOKIA ALCATEL-LUCENT SHANGHAI BELL:
"On remaining details of MUST Case 1 and 2",
3GPP DRAFT; R1-1612791 ON THE REMAINING
DETAILS OF MUST CASE 1 AND 2, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; F , vol. RAN WG1, no. Reno, U.S.A.;
20161114 - 20161118 13 November 2016
(2016-11-13), XP051176733, Retrieved from the
Internet:
URL:http://www.3gpp.org/ftp/Meetings_3GPP_
SYNC/RAN1/Docs/ [retrieved on 2016-11-13]**
• **NOKIA ET AL.: 'On Remaining Details of MUST
Case 1 and 2' 3GPP TSG-RAN WG1 MEETING #87,
R1-1612791 04 November 2016, XP051176733**

- **ERICSSON: 'Introduction of MUST' 3GPP TSG-RAN MEETING #87, R1-1612303 10 November 2016, XP051176252**

**Description**

**TECHNICAL FIELD**

The present disclosure relates to a method and device for generating a jointly modulated symbol and a transmitter.

**BACKGROUND**

The superposition transmission in the field of communications refers to that a downlink non-orthogonal multiple access (NOMA) system transmits data to multiple receiving terminals on the same time-frequency resource at the same time. These receiving terminals are divided into near-end users and remote users. Bit information transmitted to the near-end users from the transmitter is subjected to modulation mapping to obtain a group of data symbols, and bit information transmitted to the remote users from the transmitter is subjected to modulation mapping to obtain another group of data symbols. These two groups of data symbols are weighted based on a transmission power ratio to obtain a combined data symbol, and the combined data symbol is transmitted to the near-end users and the remote users. The transmission power ratio is a ratio of the transmission power allocated by the transmitter to the remote users on a superposition layer in a total transmission power on the superposition layer. Further relevant technologies are also known from ERICSSON: "Introduction of MUST", 3GPP DRAFT, XP051176252, 13 November 2016 (2016-11-13); and NOKIA ALCATEL-LUCENT SHANGHAI BELL: "On remaining details of MUST Case 1 and 2" 3GPP DRAFT, XP051176733, 13 November 2016 (2016-11-13).

**SUMMARY**

The invention is defined in the appended claims.

**BRIEF** DESCRIPTION OF DRAWINGS

FIG. 1 is a schematic diagram of a combined constellation obtained by jointly modulated and mapped according to an embodiment of the present disclosure;
FIG. 2 is schematic diagram one of generating a constellation point of a combined constellation x according to an embodiment of the present disclosure;
FIG. 3 is schematic diagram two of generating a constellation point of a combined constellation x according to an embodiment of the present disclosure;
FIG. 4 is schematic diagram three of generating a constellation point of a combined constellation x according to an embodiment of the present disclosure; and
FIG. 5 is a structural diagram of a device for generating a jointly modulated symbol according to an embodiment of the present disclosure.

**DETAILED DESCRIPTION**

To provide a more detailed understanding of features and content of embodiments of the present disclosure, implementation of the embodiments of the present disclosure is described below in detail with reference to the drawings. The drawings are provided for reference only and are not intended to limit the embodiments of the present disclosure.
Different from an orthogonal multiple access system, data symbols mapped on time-frequency resources by a NOMA system are not binary phase shift keying (BPSK), quadrature phase shift keying (QPSK), 16 quadrature amplitude modulation (16QAM), 64QAM and 256QAM of a single user, but a combined constellation symbol generated by superposition coding. Different transmission power ratios corresponding to different constellations, and how to characterize a combined constellation is not determined yet. No effective solution has been proposed yet for how to characterize the method for generating the combined constellation.
A method and a device for generating a jointly modulated symbol according to embodiments of the present disclosure are provided to solve the problems that how to characterize a combined constellation when different transmission power ratios corresponding to different constellations and the traditional constellation is unable to be characterized in other methods.
The method for generating the jointly modulated symbol in the embodiments of the present disclosure is mainly applied to a transmitter side, including:

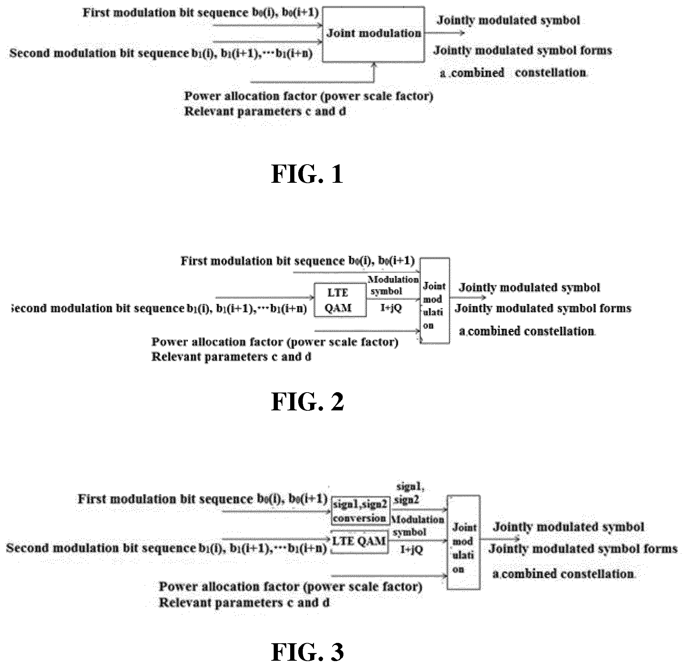

a bit sequence transmitted by a NOMA system to a remote user is expressed as bo(i), $b_0$(i+1), a modulation scheme is a QPSK modulation; the bit sequence transmitted by the NOMA system to a near-end user is expressed as bi(i), $b_1$(i+1),···$b_1$(i+n), a first modulation bit sequence bo(i), $b_0$(i+1) and a second modulation bit sequence bi(i), $b_1$(i+1),···$b_1$(i+n), which are m bits in total, are jointly modulated and mapped to obtain a combined constellation x, where i is a natural number, n ∈ {1,3,5}, m ∈ {4,6,8}, as shown in FIG. 1.

A constellation point of the combined constellation x is generated in any one of manners described below, as shown in FIG. 2.

In a first generating manner, firstly, a constellation point in a third quadrant of the combined constellation x is obtained through the following formula: $x_1$= c((I-d)+j(Q-d)); where I and Q are coordinates of the constellation point $S_2$ of the second modulation bit sequence bi(i), $b_1$(i+1),...b1(i+n), c and d are parameters related to power allocation of the first modulation bit sequence and the second modulation bit sequence in the combined constellation.

Secondly, the combined constellation x is obtained through $x_1$ according to the following formula.

$$x = sign1 \times \left( real(x_1) \right) + sign2 \times \left( imag(x_1) \right)$$

where real() denotes an operation for obtaining the real part, imag() denotes an operation for obtaining the imaginary part. sign1 and sign2 are obtained by the first modulation bit sequence bo(i), $b_0$(i+1) or obtained by a quadrature phase shift keying (QPSK) symbol mapped by the first modulation bit sequence bo(i), $b_0$(i+1).

When the first modulation bit sequence bo(i), $b_0$(i+1) is 00, sign1=-1 and sign2=-j; when the first modulation bit sequence bo(i), $b_0$(i+1) is 10, sign1=1 and sign2=-j; when the first modulation bit sequence bo(i), $b_0$(i+1) is 01, sign1=-1 and sign2=j; and when the first modulation bit sequence bo(i), $b_0$(i+1) is 11, sign1=1 and sign2=j. sign1 and sign2 meet the following formulas:

$$sign1 = (-1)^{(1-b_0(i))}$$

$$sign2 = j \times (-1)^{(1-b_0(i+1))}$$

Assuming that modulation scheme of the first modulation bit sequence is QPSK, when $s_1 = \frac{\sqrt{2}}{2} + j\frac{\sqrt{2}}{2}$, sign1=-1 and sign2=-j; when $s_1 = -\frac{\sqrt{2}}{2} + j\frac{\sqrt{2}}{2}$, sign1=1 and sign2=-j; when $s_1 = -\frac{\sqrt{2}}{2} - j\frac{\sqrt{2}}{2}$, sign1=1 and sign2=j; and when $s_1 = \frac{\sqrt{2}}{2} - j\frac{\sqrt{2}}{2}$, sign1=-1, sign2=j. sign1 and sign2 meet the following formulas:

$$sign1 = sign3(sign(real(s_1)))$$

$$sign2 = j \times sign3(sign(imag(s_1)))$$

where sign() denotes a sign function, sign3() denotes an inverse function of the sign function.

In a second generating manner, firstly, a constellation point $x_2$ in a first quadrant of the combined constellation x is obtained according to the following formula:

$$x_2 = c_2((I + d_2) + j(Q + d_2))$$

where I and Q are coordinates of the constellation point $S_2$ of the second modulation bit sequence bi(i), $b_1$(i+1),...$b_1$(i+n), $S_2$=I +jQ, $c_2$ and $d_2$ are parameters related to power allocation of the first modulation bit sequence and the second modulation bit sequence in the combined constellation.

Secondly, the combined constellation x is obtained through $x_2$ according to the following formula:

$$x = sign1 \times \left(real(x_2)\right) + sign2 \times \left(imag(x_2)\right)$$

where real() denotes an operation for obtaining the real part, imag() denotes an operation for obtaining the imaginary part. sign1 and sign2 are obtained by the first modulation bit sequence bo(i), $b_0$(i+1) or obtained by the quadrature phase shift keying (QPSK) symbol mapped by the first modulation bit sequence bo(i), $b_0$(i+1).

When the first modulation bit sequence bo(i), $b_0$(i+1) is 00, sign1=1 and sign2=j; when the first modulation bit sequence bo(i), $b_0$(i+1) is 10, sign1=-1 and sign2=j; when the first modulation bit sequence bo(i), $b_0$(i+1) is 01, sign1=1 and sign2=-j; and when the first modulation bit sequence bo(i), $b_0$(i+1) is 11, sign1=-1 and sign2=-j. sign1 and sign2 meet the following formulas:

$$sign1 = (-1)^{b_0(i)}$$

$$sign2 = j \times (-1)^{b_0(i+1)}$$

Assuming that modulation scheme of the first modulation bit sequence is QPSK, when a constellation point of the first modulation bit sequence bo(i), $b_0$(i+1) is $s_1 = \frac{\sqrt{2}}{2} + j\frac{\sqrt{2}}{2}$ , sign1=1 and sign2=j; when a constellation point of the first modulation bit sequence bo(i), $b_0$(i+1) is $s_1 = \frac{-\sqrt{2}}{2} + j\frac{\sqrt{2}}{2}$, sign1=-1 and sign2=j; when the constellation point of the first modulation bit sequence bo(i), $b_0$(i+1) is $s_1 = -\frac{\sqrt{2}}{2} - j\frac{\sqrt{2}}{2}$ , sign1=-1, sign2=-j; and when the constellation point of the first modulation bit sequence $b_0$(i), $b_0$(i+1) is $s_1 = \frac{\sqrt{2}}{2} - j\frac{\sqrt{2}}{2}$ , sign1=1, sign2=-j. sign1 and sign2 meet the following formulas:

$$sign1 = sign(real(s_1))$$

$$sign2 = j \times sign(imag(s_1))$$

where sign() denotes a sign function, such as sign(2)=1, sign(-2)=-1.

In the above method, in the first manner, c and d are related to transmission power. When n=1 and a first transmission power radio is 8/10, then c is $\sqrt{1/5}$ and d is $\sqrt{2}$ , as shown in the following table:

| First transmission power radio | c | d |
|---|---|---|
| 8/10 | $\sqrt{1/5}$ | $\sqrt{2}$ |

When n=1 and a second transmission power radio is 50/58, then c is $2/\sqrt{29}$ and d is $5/(2\sqrt{2})$ , as shown in the following table:

| Second transmission power radio | c | d |
|---|---|---|
| 50/58 | $2/\sqrt{29}$ | $5/(2\sqrt{2})$ |

When n=1 and a third transmission power radio is 264.5/289, then c is $7\sqrt{1/578}$ and d is $23/(7\sqrt{2})$ , as

shown in the following table:

| Third transmission power radio | c | d |
|---|---|---|
| 264.5/289 | $7\sqrt{1/578}$ | $23/(7\sqrt{2})$ |

When n=3 and the first transmission power radio is 32/42, then c is $\sqrt{5/21}$ and d is $2\sqrt{2/5}$, as shown in the following table:

| First transmission power radio | c | d |
|---|---|---|
| 32/42 | $\sqrt{5/21}$ | $2\sqrt{2/5}$ |

When n=3 and the second transmission power radio is 144.5/167, then c is $3\sqrt{5/334}$ and d is $17/(3\sqrt{10})$, as shown in the following table:

| Second transmission power radio | c | d |
|---|---|---|
| 144.5/167 | $3\sqrt{5/334}$ | $17/(3\sqrt{10})$, |

When n=3 and the third transmission power radio is 128/138, c is $\sqrt{5/69}$ and d is $4\sqrt{2/5}$, as shown in the following table:

| Third transmission power radio | c | d |
|---|---|---|
| 128/138 | $\sqrt{5/69}$ | $4\sqrt{2/5}$ |

When n=5 and the first transmission power radio is 128/170, c is $\sqrt{21/85}$ and d is $4\sqrt{2/21}$, as shown in the following table:

| First transmission power radio | c | d |
|---|---|---|
| 128/170 | $\sqrt{21/85}$ | $4\sqrt{2/21}$ |

When n=5 and the second transmission power radio is 40.5/51, then c is $\sqrt{7/34}$ and d is $3\sqrt{3/14}$, as shown in the following table:

| Second transmission power radio | c | d |
|---|---|---|
| 40.5/51 | $\sqrt{7/34}$ | $3\sqrt{3/14}$ |

When n=5 and the third transmission power radio is 288/330, then c is $\sqrt{7/55}$ and d is $2\sqrt{6/7}$, as shown in the following table:

| Third transmission power radio | c | d |
|---|---|---|
| 288/330 | $\sqrt{7/55}$ | $2\sqrt{6/7}$ |

In the above method, in the second manner, $c_2$ and $d_2$ are related to transmission power, when n=1 and the first transmission power radio is 8/10, then $c_2$ is $-\sqrt{1/5}$ and $d_2$ is $-\sqrt{2}$, as shown in the following table:

| First transmission power | $c_2$ | $d_2$ |
|---|---|---|
| 8/10 | $-\sqrt{1/5}$ | $-\sqrt{2}$ |

When n=1 and the second transmission power radio is 50/58, then $c_2$ is $-2/\sqrt{29}$, and $d_2$ is $-5/(2\sqrt{2})$, as shown in the following table:

| Second transmission power radio | $c_2$ | $d_2$ |
|---|---|---|
| 50/58 | $-2/\sqrt{29}$ | $-5/(2\sqrt{2})$ |

When n=1 and the third transmission power radio is 264.5/289, then $c_2$ is $-7/\sqrt{1/578}$ and $d_2$ is $-23/(7\sqrt{2})$, as shown in the following table:

| Third transmission power radio | $c_2$ | $d_2$ |
|---|---|---|
| 264.5/289 | $-7/\sqrt{1/578}$ | $-23/(7\sqrt{2})$ |

When n=3 and the first transmission power radio is 32/42, then $c_2$ is $-\sqrt{5/21}$ and $d_2$ is $-2\sqrt{2/5}$, as shown in the following table:

| First transmission power radio | $c_2$ | $d_2$ |
|---|---|---|
| 32/42 | $-\sqrt{5/21}$ | $-2\sqrt{2/5}$ |

When n=3 and the second transmission power radio is 144.5/167, then $c_2$ is $-3\sqrt{5/334}$ and $d_2$ is $-17/(3\sqrt{10})$, as shown in the following table:

| Second transmission power radio | $c_2$ | $d_2$ |
|---|---|---|
| 144.5/167 | $-3\sqrt{5/334}$ | $-17/(3\sqrt{10})$ |

When n=3 and the third transmission power radio is 128/138, $c_2$ is $-\sqrt{5/69}$ and $d_2$ is $-4\sqrt{2/5}$, as shown in the following table:

| Third transmission power radio | $c_2$ | $d_2$ |
|---|---|---|
| 128/138 | $-\sqrt{5/69}$ | $-4\sqrt{2/5}$ |

When n=5 and the first transmission power radio is 128/170, then $c_2$ is $-\sqrt{21/85}$ and $d_2$ is - $4\sqrt{2/21}$, as shown in the following table:

| First transmission power radio | $c_2$ | $d_2$ |
|---|---|---|
| 128/170 | $-\sqrt{21/85}$ | $-4\sqrt{2/21}$ |

When n=5 and the second transmission power radio is 40.5/51, $c_2$ is $-\sqrt{7/34}$ and $d_2$ is - $3\sqrt{3/14}$, as shown in the following table:

| Second transmission power radio | $c_2$ | $d_2$ |
|---|---|---|
| 40.5/51 | $-\sqrt{7/34}$ | $-3\sqrt{3/14}$ |

When n=5 and the third transmission power radio is 288/330, then $c_2$ is $-\sqrt{7/55}$ and $d_2$ is - $2\sqrt{6/7}$, as shown in the following table:

| Third transmission power radio | $c_2$ | $d_2$ |
|---|---|---|
| 288/330 | $-\sqrt{7/55}$ | $-2\sqrt{6/7}$ |

The essence of solutions of the embodiments of the present disclosure is further illustrated by specific examples hereinafter.

Example one

In this example, assuming that n=1 and a modulation scheme of the second modulation bit sequence is QPSK, the first modulation bit sequence $b_0(i)$, $b_0(i+1)$ and the second modulation bit sequence $b_1(i)$, $b_1(i+1)$, that is 4 bits in total, are jointly modulated and mapped to obtain a combined constellation x, where i is a natural number.
The first generation manner is adopted to generate the constellation point of the combined constellation x, as shown in FIG. 3.

When the first transmission power radio is 8/10, then c is $\sqrt{1/5}$ and d is $\sqrt{2}$, as shown in the following table:

| First transmission power radio | c | d |
|---|---|---|
| 8/10 | $\sqrt{1/5}$ | $\sqrt{2}$ |

A modulation mapping relationship of the first bit sequence $b_0(i)$, $b_0(i+1)$ is as shown in the following table:

| bo (i), $b_0$(i+1) | $I$ | $Q$ |
|---|---|---|
| 00 | $1/\sqrt{2}$ | $1/\sqrt{2}$ |
| 01 | $1/\sqrt{2}$ | $-1/\sqrt{2}$ |
| 10 | $-1/\sqrt{2}$ | $1/\sqrt{2}$ |
| 11 | $-1/\sqrt{2}$ | $-1/\sqrt{2}$ |

Firstly, the constellation point $x_1$ in a third quadrant of the combined constellation x is obtained by the following formula:

$$x_1 = \sqrt{1/5}\left((I - \sqrt{2}) + j(Q - \sqrt{2})\right)$$

Secondly, the combined constellation x is obtained through $x_1$ according to the following formula: $x = sign1 \times (real(x_1)) + sign2 \times (imag(x_1))$.

where real() denotes an operation for obtaining the real part, imag() denotes an operation for obtaining the imaginary part, sign1 and sign2 are obtained through the following formulas:

$$sign1 = (-1)^{(1-b_0(i))}$$

$$sign2 = j \times (-1)^{(1-b_0(i+1))}$$

Alternatively, sign1 and sign2 are obtained through the following formulas:

$$sign1 = sign3(sign(real(s_1)))$$

$$sign2 = j \times sign3(sign(imag(s_1)))$$

where $s_1$ is the constellation point of the first modulation bit sequence bo(i), $b_0$(i+1), sign() denotes a sign function, sign3() denotes an inverse function of the sign function.

Example two

In this example, assuming that n=1 and a modulation scheme of the second modulation bit sequence is QPSK, the first modulation bit sequence bo(i), $b_0$(i+1) and the second modulation bit sequence bi(i), $b_1$(i+1), that is 4 bits in total, are jointly modulated and mapped to obtain a combined constellation x, where i is a natural number.

The first generation manner is adopted to generate the constellation point of the combined constellation x.

When the second transmission power radio is 50/58, then c is $2/\sqrt{29}$ and d is $5/(2\sqrt{2})$, as shown in the following table:

| Second transmission power radio | c | d |
|---|---|---|
| 50/58 | $2/\sqrt{29}$ | $5/(2\sqrt{2})$ |

The modulation mapping relationship of the first bit sequence bo(i), $b_0$(i+1) is as shown in the following table:

| bo (i), $b_0$(i+1) | $I$ | $Q$ |
|---|---|---|
| 00 | $1/\sqrt{2}$ | $1/\sqrt{2}$ |
| 01 | $1/\sqrt{2}$ | $-1/\sqrt{2}$ |
| 10 | $-1/\sqrt{2}$ | $1/\sqrt{2}$ |
| 11 | $-1/\sqrt{2}$ | $-1/\sqrt{2}$ |

Firstly, the constellation point $x_1$ in a third quadrant of the combined constellation x is obtained according to the following formula:

$$x_1 = 2/\sqrt{29}\left((I - 5/(2\sqrt{2})) + j(Q - 5/(2\sqrt{2}))\right)$$

Secondly, the combined constellation x is obtained through $x_1$ according to the following formula: x = sign1 $\times$ (real($x_1$)) + sign2$\times$(imag($x_1$)).

where real() denotes an operation for obtaining the real part, imag() denotes an operation for obtaining the imaginary part, sign1 and sign2 are obtained by the following formulas:

$$sign1 = (-1)^{(1-b_0(i))}$$

$$sign2 = j \times (-1)^{(1-b_0(i+1))}$$

Alternatively, sign1 and sign2 are obtained by the following formulas:

$$sign1 = sign3(sign(real(s_1)))$$

$$sign2 = j \times sign3(sign(imag(s_1)))$$

where $s_1$ is the constellation point of the first modulation bit sequence bo(i), $b_0$(i+1), sign() denotes a sign function, sign3() denotes an inverse function of the sign function.

Example three

In this example, assuming that n=1 and a modulation scheme of the second modulation bit sequence is QPSK, the first modulation bit sequence bo(i), $b_0$(i+1) and the second modulation bit sequence bi(i), $b_1$(i+1), that is 4 bits in total, are jointly modulated and mapped to obtain a combined constellation x, where i is a natural number.

The first generation manner is adopted to generate the constellation point of the combined constellation x.

When the third transmission power radio is 264.5/289, then c is $7\sqrt{1/578}$ and d is $23/(7\sqrt{2})$, as shown in the following table:

| Third transmission power radio | c | d |
|---|---|---|
| 264.5/289 | $7\sqrt{1/578}$ | $23/(7\sqrt{2})$ |

The modulation mapping relationship of the first bit sequence bo(i), $b_0$(i+1) is as shown in the following table:

| bo (i), $b_0$(i+1) | I | Q |
|---|---|---|
| 00 | $1/\sqrt{2}$ | $1/\sqrt{2}$ |
| 01 | $1/\sqrt{2}$ | $-1/\sqrt{2}$ |
| 10 | $-1/\sqrt{2}$ | $1/\sqrt{2}$ |
| 11 | $-1/\sqrt{2}$ | $-1/\sqrt{2}$ |

Firstly, the constellation point $x_2$ in a third quadrant of the combined constellation x is obtained according to the following formula:

$$x_2 = 7\sqrt{1/578}\left((I - 23/(7\sqrt{2})) + j(Q\text{-}23/(7\sqrt{2}))\right)$$

Secondly, the combined constellation x is obtained through $x_2$, according to the following formula:

$$x = sign1 \times \left(real(x_2)\right) + sign2 \times \left(imag(x_2)\right)$$

where real() denotes an operation for obtaining the real part, imag() denotes an operation for obtaining the imaginary part, sign1 and sign2 are obtained by the following formulas:

$$sign1 = (-1)^{(1-b_0(i))}$$

$$sign2 = j \times (-1)^{(1-b_0(i+1))}$$

Alternatively, sign1 and sign2 are obtained by the following formulas:

$$sign1 = sign3(sign(real(s_1)))$$

$$sign2 = j \times sign3(sign(imag(s_1)))$$

where $s_1$ is the constellation point of the first modulation bit sequence bo(i), $b_0$(i+1), sign() denotes a sign function, sign3() denotes an inverse function of the sign function.

Example four

In this example, assuming that n=1 and a modulation scheme of the second modulation bit sequence is QPSK, the first modulation bit sequence bo(i), $b_0$(i+1) and the second modulation bit sequence bi(i), $b_1$(i+1), that is 4 bits in total, are jointly modulated and mapped to obtain a combined constellation x, where i is a natural number.
The first generation manner is adopted to generate the constellation point of the combined constellation x.

When the first transmission power radio is 8/10, then c is $\sqrt{1/5}$ and d is $\sqrt{2}$, as shown in the following table:

| First transmission power radio | c | d |
|---|---|---|
| 8/10 | $\sqrt{1/5}$ | $\sqrt{2}$ |

The modulation mapping relationship of the first bit sequence bo(i), $b_0$(i+1) is as shown in the following table:

| bo (i), $b_0$(i+1) | I | Q |
|---|---|---|
| 00 | $1/\sqrt{2}$ | $1/\sqrt{2}$ |
| 01 | $1/\sqrt{2}$ | $-1/\sqrt{2}$ |
| 10 | $-1/\sqrt{2}$ | $1/\sqrt{2}$ |
| 11 | $-1/\sqrt{2}$ | $-1/\sqrt{2}$ |

Firstly, the constellation point $x_1$ in a third quadrant of the combined constellation x is obtained according to the following formula:

$$x_1 = \sqrt{1/5}\left((I - \sqrt{2}) + j(Q\text{-}\sqrt{2})\right)$$

Secondly, the combined constellation x is obtained through $x_1$ according to the following formula: $x$ = sign1 $\times$ ($real(x_1)$) + $sign2 \times (imag(x_1))$

where real() denotes an operation for obtaining the real part, imag() denotes an operation for obtaining the imaginary part, sign1 and sign2 are as follows:

$$\mathrm{si}\,gn1 = e^{j\varphi_0\pi}$$

$$\mathrm{si}\,gn2 = e^{j(\varphi_1+1/2)\pi}$$

$\varphi_0$, $\varphi_1$ may be obtained by the first modulation bit sequence bo(i), $b_0$(i+1) as follows:

$$\varphi_0 = 1\text{-}b_0(i)$$

$$\varphi_1 = 1\text{-}b_0(i+1);$$

Alternatively, $\varphi_0$, $\varphi_1$ are obtained by a QPSK symbol mapped by the first modulation bit sequence bo(i), $b_0$(i+1):

$$\varphi_0 = (sign(real(s_1)) + 1)/2$$

$$\varphi_1 = (sign(imag(s_1)) + 1)/2$$

where $s_1$ is the constellation point of the first modulation bit sequence bo(i), $b_0$(i+1), sign () denotes a sign function.

Example five

In this example, assuming that n=1 and a modulation scheme of the second modulation bit sequence is QPSK, the first modulation bit sequence bo(i), $b_0$(i+1) and the second modulation bit sequence bi(i), $b_1$(i+1), that 4 bits in total, are jointly modulated and mapped to obtain a combined constellation x, where i is a natural number.
The first generation manner is adopted to generate the constellation point of the combined constellation x.

When the second transmission power radio is 50/58, then c is $2/\sqrt{29}$ and d is $5/(2\sqrt{2})$, as shown in the following table:

| Second transmission power radio | c | d |
|---|---|---|
| 50/58 | $2/\sqrt{29}$ | $5/(2\sqrt{2})$ |

The modulation mapping relationship of the first bit sequence $b_0(i)$, $b_0(i+1)$ is as shown in the following table:

| bo (i), $b_0$(i+1) | I | Q |
|---|---|---|
| 00 | $1/\sqrt{2}$ | $1/\sqrt{2}$ |
| 01 | $1/\sqrt{2}$ | $-1/\sqrt{2}$ |
| 10 | $-1/\sqrt{2}$ | $1/\sqrt{2}$ |
| 11 | $-1/\sqrt{2}$ | $-1/\sqrt{2}$ |

Firstly, the constellation point $x_1$ in a third quadrant of the combined constellation x is obtained according to the following formula:

$$x_1 = 2/\sqrt{29}\left((I - 5/(2\sqrt{2})) + j(Q\text{-}5/(2\sqrt{2}))\right)$$

Secondly, the combined constellation x is obtained through $x_1$ according to the following formula x = sign1 $\times$ (*real*($x_1$)) + *sign2*$\times$(*imag*($x_1$)).
where real() denotes an operation for obtaining the real part, imag() denotes an operation for obtaining the imaginary part, sign1 and sign2 are obtained by the following formulas:

$$si\,gn1 = e^{j\varphi_0\pi}$$

$$si\,gn2 = e^{j(\varphi_1+1/2)\pi}$$

$\varphi_0$, $\varphi_1$ may be obtained by the first modulation bit sequence bo(i), $b_0$(i+1) as follows:

$$\varphi_0 = 1\text{-}b_0(i)$$

$$\varphi_1 = 1\text{-}b_0(i+1)$$

Alternatively, $\varphi_0$, $\varphi_1$ are obtained by a QPSK symbol mapped by the first modulation bit sequence bo(i), $b_0$(i+1):

$$\varphi_0 = (sign(real(s_1)) + 1)/2$$

$$\varphi_1 = (sign(imag(s_1)) + 1)/2$$

where $s_1$ is the constellation point of the first modulation bit sequence bo(i), $b_0$(i+1), sign () denotes a sign function.

Example six

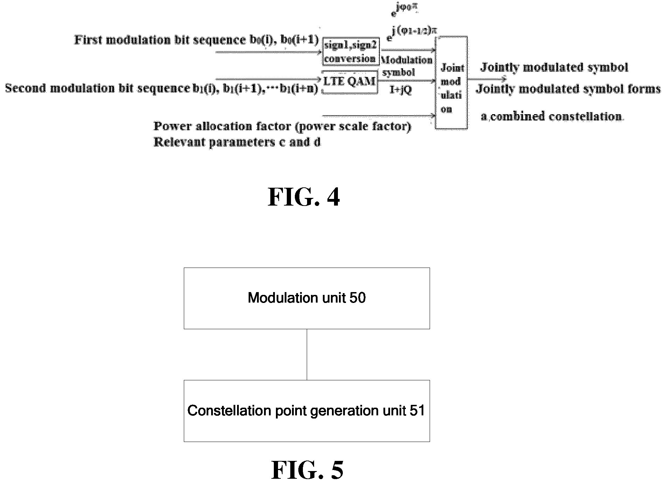

In this example, assuming that n=1 and a modulation scheme of the second modulation bit sequence is QPSK, the first modulation bit sequence b0(i), b0(i+1) and the second modulation bit sequence b1(i), b1(i+1), that is 4 bits in total, are jointly modulated and mapped to obtain a combined constellation x, where i is a natural number.
The first generation manner is adopted to generated the constellation point of the combined constellation x, as shown in FIG. 4.

When the third transmission power radio is 264.5/289, then c is $7\sqrt{1/578}$ and d is $23/(7\sqrt{2})$, as shown in the following table:

| Third transmission power radio | c | d |
|---|---|---|
| 264.5/289 | $7\sqrt{1/578}$ | $23/(7\sqrt{2})$ |

The modulation mapping relationship of the first bit sequence bo(i), $b_0(i+1)$ is as shown in the following table:

| bo (i), $b_0(i+1)$ | I | Q |
|---|---|---|
| 00 | $1/\sqrt{2}$ | $1/\sqrt{2}$ |
| 01 | $1/\sqrt{2}$ | $-1/\sqrt{2}$ |
| 10 | $-1/\sqrt{2}$ | $1/\sqrt{2}$ |
| 11 | $-1/\sqrt{2}$ | $-1/\sqrt{2}$ |

Firstly, the constellation point $x_2$ in a third quadrant of the combined constellation x is obtained according to the following formula:

$$x_1 = 7\sqrt{1/578}\left((I - 23/(7\sqrt{2})) + j(Q-23/(7\sqrt{2}))\right)$$

Secondly, the combined constellation x is obtained through $x_1$, according to the following formula:

$$x = sign1\left(real(x_1)\right) + sign2\left(imag(x_1)\right)$$

where real() denotes an operation for obtaining the real part, imag() denotes an operation for obtaining the imaginary part, sign1 and sign2 are obtained by the following formulas:

$$si\,gn1 = e^{j\varphi_0\pi}$$

$$si\,gn2 = e^{j(\varphi_1+1/2)\pi}$$

$\varphi_0$, $\varphi_1$ may be obtained by the first modulation bit sequence bo(i), $b_0(i+1)$ as follows:

$$\varphi_{0,} = 1-b_0(i)$$

$$\varphi_1 = 1-b_0(i+1)$$

Alternatively, $\varphi_0$, $\varphi_1$ are obtained by a QPSK symbol mapped by the first modulation bit sequence bo(i), $b_0(i+1)$:

$$\varphi_0 = (sign(real(s_1)) + 1)/2$$

$$\varphi_1 = (sign(imag(s_1)) + 1)/2$$

where $s_1$ is the constellation point of the first modulation bit sequence bo(i), $b_0$(i+1), sign () denotes a sign function.

Example seven

In this example, assuming that n=1and a modulation scheme of the second modulation bit sequence is QPSK, the first modulation bit sequence bo(i), $b_0$(i+1) and the second modulation bit sequence bi(i), $b_1$(i+1) are jointly modulated to obtain a 4-bit sequence, and the 4-bit sequence is mapped to obtain a combined constellation x, where i is a natural number.

The first generation manner is adopted to generate the constellation point of the combined constellation x.

When the first transmission power radio is 8/10, then c is $\sqrt{1/5}$ and d is $\sqrt{2}$, as shown in the following table:

| First transmission power radio | c | d |
|---|---|---|
| 8/10 | $\sqrt{1/5}$ | $\sqrt{2}$ |

The modulation mapping relationship of the first bit sequence $b_0$(i), $b_0$(i+1) is as shown in the following table:

| bo (i), $b_0$(i+1) | I | Q |
|---|---|---|
| 00 | $1/\sqrt{2}$ | $1/\sqrt{2}$ |
| 01 | $1/\sqrt{2}$ | $-1/\sqrt{2}$ |
| 10 | $-1/\sqrt{2}$ | $1/\sqrt{2}$ |
| 11 | $-1/\sqrt{2}$ | $-1/\sqrt{2}$ |

Firstly, the constellation point $x_1$ in a third quadrant of the combined constellation x is obtained according to the following formula:

$$x_1 = \sqrt{1/5}\left((I - \sqrt{2}) + j(Q - \sqrt{2})\right)$$

Secondly, the combined constellation x is obtained through $x_1$ according to the following formula: $x = sign1 \times (real(x_1)) + sign2 \times (imag(x_1))$

where real() denotes an operation for obtaining the real part, imag() denotes an operation for obtaining the imaginary part, sign1 and sign2 are as follows:

$$\mathrm{si}\,gn1 = e^{j\varphi_0\pi}$$

$$\mathrm{si}\,gn2 = e^{j(\varphi_1+1/2)\pi}$$

$\varphi_0$, $\varphi_1$, bo(i), $b_0$(i+1) and a first modulation symbol si meet the following correspondence relationship:

| $b_0$(i), $b_0$(i+1) | (sign(real($s_1$)), sign(imag($s_1$))) | $\varphi_0$ | $\varphi_1$ |
|---|---|---|---|
| 00 | (1,1) | 1 | 1 |
| 01 | (1,-1) | 1 | 0 |
| 10 | (-1,1) | 0 | 1 |
| 11 | (-1,-1) | 0 | 0 |

Example eight

In this example, assuming that n=1 and a modulation scheme of the second modulation bit sequence is QPSK, the first modulation bit sequence bo(i), $b_0$(i+1) and the second modulation bit sequence bi(i), $b_1$(i+1) are jointly modulated to obtain a 4-bit sequence, and the 4-bit sequence is mapped to obtain a combined constellation x, where i is a natural number.

The first generation manner is adopted to generate the constellation point of the combined constellation x.

When the second transmission power radio is 50/58, then c is $2/\sqrt{29}$ and d is $5/(2\sqrt{2})$, as shown in the following table:

| Second transmission power radio | c | d |
|---|---|---|
| 50/58 | $2/\sqrt{29}$ | $5/(2\sqrt{2})$ |

The modulation mapping relationship of the first bit sequence bo(i), $b_0$(i+1) is as shown in the following table:

| bo(i), $b_0$(i+1) | I | Q |
|---|---|---|
| 00 | $1/\sqrt{2}$ | $1/\sqrt{2}$ |
| 01 | $1/\sqrt{2}$ | $-1/\sqrt{2}$ |
| 10 | $-1/\sqrt{2}$ | $1/\sqrt{2}$ |
| 11 | $-1/\sqrt{2}$ | $-1/\sqrt{2}$ |

Firstly, the constellation point $x_1$ in a third quadrant of the combined constellation x is obtained according to the following formula:

$$x_1 = 2/\sqrt{29}\left((I - 5/(2\sqrt{2})) + j(Q\text{-}5/(2\sqrt{2}))\right)$$

Secondly, the combined constellation x is obtained through $x_1$ according to the following formula: x = *sign!* $\times$ (*real*($x_1$)) + *sign2*$\times$(*imag*($x_1$)).

where real() denotes an operation for obtaining the real part, imag() denotes an operation for obtaining the imaginary part, sign1 and sign2 are obtained by the following formulas:

$$\text{si}\,gn1 = e^{j\varphi_0\pi}$$

$$\text{si}\,gn2 = e^{j(\varphi_1+1/2)\pi}$$

$\varphi_0$, $\varphi_1$, bo(i), $b_0$(i+1) and a first modulation symbol si meet the following correspondence relationship:

| bo(i), $b_0$(i+1) | (sign(real($s_1$)),sign(imag($s_1$))) | $\varphi_0$ | $\varphi_1$ |
|---|---|---|---|
| 00 | (1,1) | 1 | 1 |
| 01 | (1,-1) | 1 | 0 |
| 10 | (-1,1) | 0 | 1 |
| 11 | (-1,-1) | 0 | 0 |

Example nine

In this example, assuming that n=1 and a modulation scheme of the second modulation bit sequence is QPSK, the first modulation bit sequence bo(i), $b_0$(i+1) and the second modulation bit sequence bi(i), $b_1$(i+1) are jointly modulated to obtain a 4-bit sequence, and the 4-bit sequence is mapped to obtain a combined constellation x, where i is a natural number.

The first generation manner is adopted to generate the constellation point of the combined constellation x.

When the third transmission power radio is 264.5/289, then c is $7\sqrt{1/578}$ and d is $23/(7\sqrt{2})$, as shown in the following table:

| Third transmission power radio | c | d |
|---|---|---|
| 264.5/289 | $7\sqrt{1/578}$ | $23/(7\sqrt{2})$ |

The modulation mapping relationship of the first bit sequence bo(i), $b_0$(i+1) is as shown in the following table:

| bo (i), $b_0$(i+1) | I | Q |
|---|---|---|
| 00 | $1/\sqrt{2}$ | $1/\sqrt{2}$ |
| 01 | $1/\sqrt{2}$ | $-1/\sqrt{2}$ |
| 10 | $-1/\sqrt{2}$ | $1/\sqrt{2}$ |
| 11 | $-1/\sqrt{2}$ | $-1/\sqrt{2}$ |

Firstly, the constellation point $x_2$ in a third quadrant of the combined constellation x is obtained according to the following formula:

$$x_1 = 7\sqrt{1/578}\left((I - 23/(7\sqrt{2})) + j(Q\text{-}23/(7\sqrt{2}))\right)$$

Secondly, the combined constellation x is obtained through $x_1$, according to the following formula:

$$x = sign1\big(real(x_1)\big) + sign2\big(imag(x_1)\big)$$

where real() denotes an operation for obtaining the real part, imag() denotes an operation for obtaining the imaginary part, sign1 and sign2 are obtained by the following formulas:

$$si\,gn1 = e^{j\varphi_0\pi}$$

$$si\,gn2 = e^{j(\varphi_1+1/2)\pi}$$

$\varphi_0$, $\varphi_1$, bo(i), $b_0$(i+1) and a first modulation symbol si meet the following correspondence relationship:

| bo(i), $b_0$(i+1) | (sign(real($s_1$)),sign(imag($s_1$))) | $\varphi_0$ | $\varphi_1$ |
|---|---|---|---|
| 00 | (1,1) | 1 | 1 |
| 01 | (1,-1) | 1 | 0 |
| 10 | (-1,1) | 0 | 1 |
| 11 | (-1,-1) | 0 | 0 |

Example ten

In this example, assuming that n=1 and a modulation scheme of the second modulation bit sequence is QPSK, the first modulation bit sequence $bo(i)$, $b_0(i+1)$ and the second modulation bit sequence $bi(i)$, $b_1(i+1)$ are jointly modulated to obtain a 4-bit sequence, and the 4-bit sequence is mapped to obtain a combined constellation x, where i is a natural number.

The second generation manner is adopted to generate the constellation point of the combined constellation x.

When the first transmission power radio is 8/10, then $c_2$ is $-\sqrt{1/5}$ and $d_2$ is $-\sqrt{2}$, as shown in the following table:

| First transmission power radio | $c_2$ | $d_2$ |
|---|---|---|
| 8/10 | $-\sqrt{1/5}$ | $-\sqrt{2}$ |

A modulation mapping relationship of the first bit sequence $bo(i)$, $b_0(i+1)$ is as shown in the following table:

| $bo(i)$, $b_0(i+1)$ | $I$ | $Q$ |
|---|---|---|
| 00 | $1/\sqrt{2}$ | $1/\sqrt{2}$ |
| 01 | $1/\sqrt{2}$ | $-1/\sqrt{2}$ |
| 10 | $-1/\sqrt{2}$ | $1/\sqrt{2}$ |
| 11 | $-1/\sqrt{2}$ | $-1/\sqrt{2}$ |

Firstly, the constellation point $x_2$ in a first quadrant of the combined constellation x is obtained by the following formula:

$$x_2 = -\sqrt{1/5}\left((I - \sqrt{2}) + j(Q-\sqrt{2})\right)$$

Secondly, the combined constellation x is obtained through $x_2$ according to the following formula: $x = sign1 \times (real(x_2)) + sign2 \times (imag(x_2))$

where real() denotes an operation for obtaining the real part, imag() denotes an operation for obtaining the imaginary part, sign1 and sign2 are obtained through the following formulas:

$$sign1 = (-1)^{b_0(i)}$$

$$sign2 = j \times (-1)^{b_0(i+1)}$$

Alternatively, sign1 and sign2 are obtained through the following formulas:

$$sign1 = sign(real(s_1))$$

$$sign2 = j \times sign(imag(s_1))$$

where $s_1$ is the constellation point of the first modulation bit sequence $bo(i)$, $b_0(i+1)$, sign() denotes a sign function.

Example eleven

In this example, assuming that n=1 and a modulation scheme of the second modulation bit sequence is QPSK, the first modulation bit sequence bo(i), $b_0$(i+1) and the second modulation bit sequence bi(i), $b_1$(i+1) are jointly modulated to obtain a 4-bit sequence, and the 4-bit sequence is mapped to obtain a combined constellation x, where i is a natural number.

The second generation manner is adopted to generate the constellation point of the combined constellation x.

When the second transmission power radio is 50/58, then $c_2$ is $-2/\sqrt{29}$ and $d_2$ is $-5/(2\sqrt{2})$ , as shown in the following table:

| Second transmission power radio | $c_2$ | $d_2$ |
|---|---|---|
| 50/58 | $-2/\sqrt{29}$ | $-5/(2\sqrt{2})$ |

The modulation mapping relationship of the first bit sequence bo(i), $b_0$(i+1) is as shown in the following table:

| b0 (i), b0(i+1) | I | Q |
|---|---|---|
| 00 | $1/\sqrt{2}$ | $1/\sqrt{2}$ |
| 01 | $1/\sqrt{2}$ | $-1/\sqrt{2}$ |
| 10 | $-1/\sqrt{2}$ | $1/\sqrt{2}$ |
| 11 | $-1/\sqrt{2}$ | $-1/\sqrt{2}$ |

Firstly, the constellation point $x_2$ in a first quadrant of the combined constellation x is obtained according to the following formula:

$$x_2 = -2/\sqrt{29}\left((I-5/(2\sqrt{2}))+ j(Q-5/(2\sqrt{2}))\right)$$

Secondly, the combined constellation x is obtained through $x_2$ according to the following formula $x = sign1\times(real(x_2)) + sign2\times(imag(x_2))$

where real() denotes an operation for obtaining the real part, imag() denotes an operation for obtaining the imaginary part, sign1 and sign2 are obtained by the following formulas:

$$sign1 = (-1)^{b_0(i)}$$

$$sign2 = j\times(-1)^{b_0(i+1)}$$

Alternatively, sign1 and sign2 are obtained by the following formulas:

$$sign1 = sign(real(s_1))$$

$$sign2 = j\times sign(imag(s_1))$$

where $s_1$ is the constellation point of the first modulation bit sequence bo(i), $b_0$(i+1), sign() denotes a sign function.

Example twelve

In this example, assuming that n=1 and a modulation scheme of the second modulation bit sequence is QPSK, the first modulation bit sequence bo(i), $b_0$(i+1) and the second modulation bit sequence bi(i), $b_1$(i+1) are jointly modulated to obtain a 4-bit sequence, and the 4-bit sequence is mapped to obtain a combined constellation x, where i is a natural number.

The second generation manner is adopted to generate the constellation point of the combined constellation x.

When the third transmission power radio is 264.5/289, then $c_2$ is $-7\sqrt{1/578}$ and $d_2$ is - $23/(7\sqrt{2})$, as shown in the following table:

| Third transmission power radio | $c_2$ | $d_2$ |
|---|---|---|
| 264.5/289 | $-7\sqrt{1/578}$ | $-23/(7\sqrt{2})$ |

The modulation mapping relationship of the first bit sequence $b_0$(i), $b_0$(i+1) is as shown in the following table:

| bo (i), $b_0$(i+1) | I | Q |
|---|---|---|
| 00 | $1/\sqrt{2}$ | $1/\sqrt{2}$ |
| 01 | $1/\sqrt{2}$ | $-1/\sqrt{2}$ |
| 10 | $-1/\sqrt{2}$ | $1/\sqrt{2}$ |
| 11 | $-1/\sqrt{2}$ | $-1/\sqrt{2}$ |

Firstly, a constellation point $x_2$ in a first quadrant of the combined constellation x is obtained through the following formula:

$$x_2 = -7\sqrt{1/578}\left((I - 23/(7\sqrt{2})) + j(Q\text{-}23/(7\sqrt{2}))\right)$$

Secondly, the combined constellation x is obtained through $x_2$ according to the following formula:

$$x = sign1 \times \left(real(x_2)\right) + sign2 \times \left(imag(x_2)\right)$$

where real() denotes an operation for obtaining the real part, imag() denotes an operation for obtaining the imaginary part, sign1 and sign2 are obtained by the following formulas:

$$sign1 = (-1)^{b_0(i)}$$

$$sign2 = j \times (-1)^{b_0(i+1)}$$

Alternatively, sign1 and sign2 are obtained by the following formulas:

$$sign1 = sign(real(s_1))$$

$$sign2 = j \times sign(imag(s_1))$$

where $s_1$ is the constellation point of the first modulation bit sequence bo(i), $b_0$(i+1), sign() denotes a sign function.

Example thirteen

In this example, assuming that n=1 and a modulation scheme of the second modulation bit sequence is QPSK, the first modulation bit sequence bo(i), $b_0$(i+1) and the second modulation bit sequence bi(i), $b_1$(i+1) are jointly modulated to obtain a 4-bit sequence, and the 4-bit sequence are mapped to obtain a combined constellation x, where i is a natural number.

The second generation manner is adopted to generate the constellation point of the combined constellation x.

When the first transmission power radio is 8/10, then $c_2$ is $-\sqrt{1/5}$ and $d_2$ is $-\sqrt{2}$, as shown in the following table:

| First transmission power radio | $c_2$ | $d_2$ |
|---|---|---|
| 8/10 | $-\sqrt{1/5}$ | $-\sqrt{2}$ |

A modulation mapping relationship of the first bit sequence $b_0$(i), $b_0$(i+1) is as shown in the following table:

| bo (i), $b_0$(i+1) | I | Q |
|---|---|---|
| 00 | $1/\sqrt{2}$ | $1/\sqrt{2}$ |
| 01 | $1/\sqrt{2}$ | $-1/\sqrt{2}$ |
| 10 | $-1/\sqrt{2}$ | $1/\sqrt{2}$ |
| 11 | $-1/\sqrt{2}$ | $-1/\sqrt{2}$ |

Firstly, the constellation point $x_2$ in a first quadrant of the combined constellation x is obtained by the following formula:

$$x_2 = -\sqrt{1/5}\left((I - \sqrt{2}) + j(Q-\sqrt{2})\right)$$

Secondly, the combined constellation x is obtained through $x_2$ according to the following formula: $x = sign1 \times (real(x_2)) + sign2 \times (imag(x_2))$

where real() denotes an operation for obtaining the real part, imag() denotes an operation for obtaining the imaginary part, sign1 and sign2 are obtained through the following formulas:

$$si\,gn1 = e^{j\varphi_0\pi}$$

$$si\,gn2 = e^{j(\varphi_1+1/2)\pi}$$

In this case, $\varphi_0$, $\varphi_1$ may be obtained by the first modulation bit sequence bo(i), $b_0$(i+1) as follows:

$$\varphi_0 = b_0(i)$$

$$\varphi_1 = b_0(i+1)$$

Alternatively, $\varphi_0$, $\varphi_1$ may be obtained by a QPSK symbol mapped by the first modulation bit sequence bo(i), $b_0$(i+1) as follows:

$$\varphi_0 = (1 - sign(real(s_1)))/2$$

$$\varphi_1 = (1 - sign(imag(s_1)))/2$$

where $s_1$ is the constellation point of the first modulation bit sequence bo(i), $b_0$(i+1), sign () denotes a sign function.

Example fourteen

In this example, assuming that n=1 and a modulation scheme of the second modulation bit sequence is QPSK, the first modulation bit sequence bo(i), $b_0$(i+1) and the second modulation bit sequence bi(i), $b_1$(i+1) are jointly modulated to obtain a 4-bit sequence, and the 4-bit sequence are mapped to obtain a combined constellation x, where i is a natural number.
The second generation manner is adopted to generate the constellation point of the combined constellation x.

When the second transmission power radio is 50/58, then $c_2$ is $-2/\sqrt{29}$ and $d_2$ is $-5/(2\sqrt{2})$, as shown in the following table:

| Second transmission power radio | $c_2$ | $d_2$ |
|---|---|---|
| 50/58 | $-2/\sqrt{29}$ | $-5/(2\sqrt{2})$ |

The modulation mapping relationship of the first bit sequence bo(i), $b_0$(i+1) is as shown in the following table:

| b0 (i), b0(i+1) | I | Q |
|---|---|---|
| 00 | $1/\sqrt{2}$ | $1/\sqrt{2}$ |
| 01 | $1/\sqrt{2}$ | $-1/\sqrt{2}$ |
| 10 | $-1/\sqrt{2}$ | $1/\sqrt{2}$ |
| 11 | $-1/\sqrt{2}$ | $-1/\sqrt{2}$ |

Firstly, a constellation point $x_2$ in a third quadrant of the combined constellation x is obtained through the following formula:

$$x_2 = -2/\sqrt{29}\left((I - 5/(2\sqrt{2})) + j(Q - 5/(2\sqrt{2}))\right)$$

Secondly, the combined constellation x is obtained through $x_2$ according to the following formula:

$$x = sign1 \times \left(real(x_2)\right) + sign2 \times \left(imag(x_2)\right)$$

where real() denotes an operation for obtaining the real part, imag() denotes an operation for obtaining the imaginary part, sign1 and sign2 are as follows:

$$si\,gn1 = e^{j\varphi_0\pi}$$

$$si\,gn2 = e^{j(\varphi_1+1/2)\pi}$$

$\varphi_0$, $\varphi_1$ may be obtained by the first modulation bit sequence bo(i), $b_0$(i+1) as follows:

$$\varphi_0 = b_0(i)$$

$$\varphi_1 = b_0(i+1)$$

Alternatively, $\varphi_0$, $\varphi_1$ may be obtained by a QPSK symbol mapped by the first modulation bit sequence bo(i), $b_0$(i+1) as follows:

$$\varphi_0 = (1 - sign(real(s_1)))/2$$

$$\varphi_1 = (1 - sign(imag(s_1)))/2$$

where $s_1$ is the constellation point of the first modulation bit sequence bo(i), $b_0$(i+1), sign() denotes a sign function.

Example fifteen

In this example, assuming that n=1 and a modulation scheme of the second modulation bit sequence is QPSK, the first modulation bit sequence bo(i), $b_0$(i+1) and the second modulation bit sequence bi(i), $b_1$(i+1) are jointly modulated to obtain a 4-bit sequence, and the 4-bit sequence is mapped to obtain a combined constellation x, where i is a natural number.

The second generation manner is adopted to generate the constellation point of the combined constellation x.

When the third transmission power radio is 264.5/289, then $c_2$ is $-7\sqrt{1/578}$ and $d_2$ is - $23/(7\sqrt{2})$, as shown in the following table:

| Third transmission power radio | $c_2$ | $d_2$ |
|---|---|---|
| 264.5/289 | $-7\sqrt{1/578}$ | $-23/(7\sqrt{2})$ |

The modulation mapping relationship of the first bit sequence bo(i), $b_0$(i+1) is as shown in the following table:

| bo (i), $b_0$(i+1) | I | Q |
|---|---|---|
| 00 | $1/\sqrt{2}$ | $1/\sqrt{2}$ |
| 01 | $1/\sqrt{2}$ | $-1/\sqrt{2}$ |
| 10 | $-1/\sqrt{2}$ | $1/\sqrt{2}$ |
| 11 | $-1/\sqrt{2}$ | $-1/\sqrt{2}$ |

Firstly, a constellation point $x_2$ in a third quadrant of the combined constellation x is obtained through the following formula:

$$x_2 = -7\sqrt{1/578}\left((I - 23/(7\sqrt{2})) + j(Q\text{-}23/(7\sqrt{2}))\right)$$

Secondly, the combined constellation x is obtained through $x_2$ according to the following formula:

$$x = sign1 \times \left(real(x_2)\right) + sign2 \times \left(imag(x_2)\right)$$

where real() denotes an operation for obtaining the real part, imag() denotes an operation for obtaining the imaginary part, sign1 and sign2 are:

$$si\,gn1 = e^{j\varphi_0\pi}$$

$$si\,gn2 = e^{j(\varphi_1+1/2)\pi}$$

In this case, $\varphi_0$, $\varphi_1$ may be obtained by the first modulation bit sequence bo(i), $b_0(i+1)$ as follows:

$$\varphi_0 = b_0(i)$$

$$\varphi_1 = b_0(i+1)$$

Alternatively, $\varphi_0$, $\varphi_1$ may be obtained through a QPSK symbol mapped by the first modulation bit sequence bo(i), $b_0(i+1)$ as follows:

$$\varphi_0 = (1 - sign(real(s_1)))/2$$

$$\varphi_1 = (1 - sign(imag(s_1)))/2$$

where $s_1$ is the constellation point of the first modulation bit sequence bo(i), $b_0(i+1)$, sign() denotes a sign function.

Example sixteen

In this example, assuming that n=3 and a modulation scheme of the second modulation bit sequence is 16QAM, the first modulation bit sequence bo(i), $b_0(i+1)$ and the second modulation bit sequence bi(i), $b_1(i+1)$, $b_1(i+2)$, $b_1(i+3)$, that is 6 bits in total, are jointly modulated and mapped to obtain a combined constellation x, where i is a natural number.
The first generation manner is adopted to generate the constellation point of the combined constellation x.

When the first transmission power radio is 32/42, then c is $\sqrt{5/21}$ and d is $2\sqrt{2/5}$, as shown in the following table:

| First transmission power radio | c | d |
|---|---|---|
| 32/42 | $\sqrt{5/21}$ | $2\sqrt{2/5}$ |

The modulation mapping relationship of the first bit sequence bo(i), $b_0(i+1)$ is as shown in the following table:

| bo(i), $b_0$(i+1) | $I$ | $Q$ |
|---|---|---|
| 00 | $1/\sqrt{2}$ | $1/\sqrt{2}$ |
| 01 | $1/\sqrt{2}$ | $-1/\sqrt{2}$ |
| 10 | $-1/\sqrt{2}$ | $1/\sqrt{2}$ |
| 11 | $-1/\sqrt{2}$ | $-1/\sqrt{2}$ |

Firstly, a constellation point $x_1$ in a third quadrant of the combined constellation x is obtained through the following formula:

$$x_1 = \sqrt{5/21}\left((I - 2\sqrt{2/5}) + j(Q - 2\sqrt{2/5})\right)$$

Secondly, the combined constellation x is obtained through $x_1$ according to the following formula:

$$x = sign1\left(real(x_1)\right) + sign2\left(imag(x_1)\right)$$

where real() denotes an operation for obtaining the real part, imag() denotes an operation for obtaining the imaginary part, sign1 and sign2 are obtained according to the following formulas:

$$sign1 = (-1)^{(1-b_0(i))}$$

$$sign2 = j \times (-1)^{(1-b_0(i+1))}$$

Alternatively, sign1 and sign2 may be obtained according to the following formulas:

$$sign1 = sign3(sign(real(s_1)))$$

$$sign2 = j \times sign3(sign(imag(s_1)))$$

where $s_1$ is the constellation point of the first modulation bit sequence bo(i), $b_0$(i+1), sign() denotes a sign function, sign3() denotes an inverse function of the sign function.

Example seventeen

In this example, assuming that n=3 and a modulation scheme of the second modulation bit sequence is 16QAM, the first modulation bit sequence bo(i), $b_0$(i+1) and the second modulation bit sequence bi(i), $b_1$(i+1), $b_1$(i+2), $b_1$(i+3), that is, 6 bits in total, are jointly modulated and mapped to obtain a combined constellation x, where i is a natural number.
The first generation manner is adopted to generate the constellation point of the combined constellation x.

When the second transmission power radio is 144.5/167, then c is $3\sqrt{5/334}$ and d is $17/(3\sqrt{10})$, as shown in the following table:

| Second transmission power radio | c | d |
|---|---|---|
| 144.5/167 | $3\sqrt{5/334}$ | $17/(3\sqrt{10})$ |

The modulation mapping relationship of the first bit sequence bo(i), $b_0$(i+1) is as shown in the following table:

| bo(i), $b_0$(i+1) | I | Q |
|---|---|---|
| 00 | $1/\sqrt{2}$ | $1/\sqrt{2}$ |
| 01 | $1/\sqrt{2}$ | $-1/\sqrt{2}$ |
| 10 | $-1/\sqrt{2}$ | $1/\sqrt{2}$ |
| 11 | $-1/\sqrt{2}$ | $-1/\sqrt{2}$ |

Firstly, a constellation point x1 in a third quadrant of the combined constellation x is obtained according to the following formula:

$$x_1 = 3\sqrt{5/334}\left((I - 17/(3\sqrt{10})) + j(Q\text{-}17/(3\sqrt{10}))\right)$$

Secondly, the combined constellation x is obtained through $x_1$ according to the following formula:

$$x = sign1\left(real(x_1)\right) + sign2\left(imag(x_1)\right)$$

where real() denotes an operation for obtaining the real part, imag() denotes an operation for obtaining the imaginary part, sign1 and sign2 are obtained according to the following formulas:

$$sign1 = (-1)^{(1-b_0(i))}$$

$$sign2 = j \times (-1)^{(1-b_0(i+1))}$$

Alternatively, sign1 and sign2 are obtained according to the following formulas:

$$sign1 = sign3(sign(real(s_1)))$$

$$sign2 = j \times sign3(sign(imag(s_1)))$$

where $s_1$ is the constellation point of the first modulation bit sequence bo(i), $b_0$(i+1), sign() denotes a sign function, sign3() denotes an inverse function of the sign function.

Example eighteen

In this example, assuming that n=3 and a modulation scheme of the second modulation bit sequence is 16QAM, the first modulation bit sequence bo(i), $b_0$(i+1) and the second modulation bit sequence bi(i), $b_1$(i+1), $b_1$(i+2), $b_1$(i+3), that is, 6 bits in total, are jointly modulated and mapped to obtain a combined constellation x, where i is a natural number.
The first generation manner is adopted to generate the constellation point of the combined constellation x.

When the third transmission power radio is 128/138, c is $\sqrt{5/69}$ and d is $4\sqrt{2/5}$, as shown in the following table:

| Third transmission power radio | c | d |
| --- | --- | --- |
| 128/138 | $\sqrt{5/69}$ | $4\sqrt{2/5}$ |

The modulation mapping relationship of the first bit sequence bo(i), $b_0$(i+1) is as shown in the following table:

| $b_0$(i), $b_0$(i+1) | I | Q |
| --- | --- | --- |
| 00 | $1/\sqrt{2}$ | $1/\sqrt{2}$ |
| 01 | $1/\sqrt{2}$ | $-1/\sqrt{2}$ |
| 10 | $-1/\sqrt{2}$ | $1/\sqrt{2}$ |
| 11 | $-1/\sqrt{2}$ | $-1/\sqrt{2}$ |

Firstly, a constellation point $x_1$ in a third quadrant of the combined constellation x is obtained according to the following formula:

$$x_1 = \sqrt{5/69}\left((I - 4\sqrt{2/5}) + j(Q - 4\sqrt{2/5})\right)$$

Secondly, the combined constellation x is obtained through $x_1$ according to the following formula:

$$x = sign1\left(real(x_1)\right) + sign2\left(imag(x_1)\right)$$

where real() denotes an operation for obtaining the real part, imag() denotes an operation for obtaining the imaginary part, sign1 and sign2 are obtained through the following formulas:

$$sign1 = (-1)^{(1-b_0(i))}$$

$$sign2 = j \times (-1)^{(1-b_0(i+1))}$$

Alternatively, sign1 and sign2 are obtained according to the following formulas:

$$sign1 = sign3(sign(real(s_1)))$$

$$sign2 = j \times sign3(sign(imag(s_1)))$$

where $s_1$ is the constellation point of the first modulation bit sequence bo(i), $b_0$(i+1), sign() denotes a sign function, sign3() denotes an inverse function of the sign function.

Example nineteen

In this example, assuming that n=3 and a modulation scheme of the second modulation bit sequence is 16QAM, the first modulation bit sequence bo(i), $b_0$(i+1) and the second modulation bit sequence bi(i), $b_1$(i+1), $b_1$(i+2), $b_1$(i+3), that is, 6 bits in total, are jointly modulated and mapped to obtain a combined constellation x, where i is a natural number.

The first generation manner is adopted to generate the constellation point of the combined constellation x.

When the first transmission power radio is 32/42, then c is $\sqrt{5/21}$ and d is $2\sqrt{2/5}$, as shown in the following table:

| First transmission power radio | c | d |
|---|---|---|
| 32/42 | $\sqrt{5/21}$ | $2\sqrt{2/5}$ |

The modulation mapping relationship of the first bit sequence $b_0$(i), $b_0$(i+1) is as shown in the following table:

| bo(i), $b_0$(i+1) | I | Q |
|---|---|---|
| 00 | $1/\sqrt{2}$ | $1/\sqrt{2}$ |
| 01 | $1/\sqrt{2}$ | $-1/\sqrt{2}$ |
| 10 | $-1/\sqrt{2}$ | $1/\sqrt{2}$ |
| 11 | $-1/\sqrt{2}$ | $-1/\sqrt{2}$ |

Firstly, a constellation point $x_1$ in a third quadrant of the combined constellation x is obtained according to the following formula:

$$x_1 = \sqrt{5/21}\left((I - 2\sqrt{2/5}) + j(Q\text{-}2\sqrt{2/5})\right)$$

Secondly, the combined constellation x is obtained through $x_1$ according to the following formula:

$$x = sign1\left(real(x_1)\right) + sign2\left(imag(x_1)\right)$$

where real() denotes an operation for obtaining the real part, imag() denotes an operation for obtaining the imaginary part, sign1 and sign2 are as follows:

$$si\,gn1 = e^{j\varphi_0\pi}$$

$$si\,gn2 = e^{j(\varphi_1+1/2)\pi}$$

In this case, $\varphi_0$, $\varphi_1$ may be obtained by the first modulation bit sequence bo (i), $b_0$(i+1) as follows:

$$\varphi_0 = 1\text{-}b_0(i)$$

$$\varphi_1 = 1\text{-}b_0(i+1)$$

Alternatively, $\varphi_0$, $\varphi_1$ may be obtained by a QPSK symbol mapped by the first modulation bit sequence bo(i), $b_0$(i+1) as follows:

$$\varphi_0 = (sign(real(s_1)) + 1) / 2$$

$$\varphi_1 = (sign(imag(s_1)) + 1) / 2$$

where $s_1$ is the constellation point of the first modulation bit sequence bo(i), $b_0$(i+1), sign() denotes a sign function.

Example twenty

In this example, assuming that n=3 and a modulation scheme of the second modulation bit sequence is 16QAM, the first modulation bit sequence bo(i), $b_0$(i+1) and the second modulation bit sequence bi(i), $b_1$(i+1), $b_1$(i+2), $b_1$(i+3), that is, 6 bits in total, are jointly modulated and mapped to obtain a combined constellation x, where i is a natural number.

The first generation manner is adopted to generate the constellation point of the combined constellation x.

When the second transmission power radio is 144.5/167, then c is $3\sqrt{5/334}$ and d is $17/(3\sqrt{10})$, as shown in the following table:

| Second transmission power radio | c | d |
|---|---|---|
| 144.5/167 | $3\sqrt{5/334}$ | $17/(3\sqrt{10})$ |

The modulation mapping relationship of the first bit sequence bo(i), $b_0$(i+1) is as shown in the following table:

| bo(i), $b_0$(i+1) | I | Q |
|---|---|---|
| 00 | $1/\sqrt{2}$ | $1/\sqrt{2}$ |
| 01 | $1/\sqrt{2}$ | $-1/\sqrt{2}$ |
| 10 | $-1/\sqrt{2}$ | $1/\sqrt{2}$ |
| 11 | $-1/\sqrt{2}$ | $-1/\sqrt{2}$ |

Firstly, a constellation point $x_1$ in a third quadrant of the combined constellation x is obtained according to the following formula:

$$x_1 = 3\sqrt{5/334}\left((I - 17/(3\sqrt{10})) + j(Q\text{-}17/(3\sqrt{10}))\right)$$

Secondly, the combined constellation x is obtained through $x_1$ as follows:

$$x = sign1(real(x_1)) + sign2(imag(x_1))$$

where real() denotes an operation for obtaining the real part, imag() denotes an operation for obtaining the imaginary part, sign1 and sign2 are as follows:

$$si\,gn1 = e^{j\varphi_0\pi}$$

$$si\,gn2 = e^{j(\varphi_1+1/2)\pi}$$

In this case, $\varphi_0$, $\varphi_1$ may be obtained through the first modulation bit sequence $b_0(i)$, $b_0(i+1)$ as follows:

$$\varphi_0 = 1-b_0(i),$$

$$\varphi_1 = 1-b_0(i+1)$$

Alternatively, $\varphi_0$, $\varphi_1$ may be obtained through a QPSK symbol mapped by the first modulation bit sequence $b_0(i)$, $b_0(i+1)$ as follows:

$$\varphi_0 = (sign(real(s_1))+1)/2$$

$$\varphi_1 = (sign(imag(s_1))+1)/2$$

where $s_1$ is the constellation point of the first modulation bit sequence $b_0(i)$, $b_0(i+1)$, sign() denotes a sign function.

Example twenty-one

In this example, assuming that n=3 and a modulation scheme of the second modulation bit sequence is 16QAM, the first modulation bit sequence $b_0(i)$, $b_0(i+1)$ and the second modulation bit sequence $b_i(i)$, $b_1(i+1)$, $b_1(i+2)$, $b_1(i+3)$, that is, 6 bits in total, are jointly modulated and mapped to obtain a combined constellation x, where i is a natural number.
The first generation manner is adopted to generate the constellation point of the combined constellation x.

When the third transmission power radio is 128/138, c is $\sqrt{5/69}$ and d is $4\sqrt{2/5}$, as shown in the following table:

| Third transmission power radio | c | d |
|---|---|---|
| 128/138 | $\sqrt{5/69}$ | $4\sqrt{2/5}$ |

The modulation mapping relationship of the first bit sequence $b_0(i)$, $b_0(i+1)$ is as shown in the following table:

| $b_0(i)$, $b_0(i+1)$ | I | Q |
|---|---|---|
| 00 | $1/\sqrt{2}$ | $1/\sqrt{2}$ |
| 01 | $1/\sqrt{2}$ | $-1/\sqrt{2}$ |
| 10 | $-1/\sqrt{2}$ | $1/\sqrt{2}$ |
| 11 | $-1/\sqrt{2}$ | $-1/\sqrt{2}$ |

Firstly, a constellation point $x_1$ in a third quadrant of the combined constellation x is obtained according to the following formula:

$$x_1 = \sqrt{5/69}\left((I-4\sqrt{2/5})+j(Q-4\sqrt{2/5})\right)$$

Secondly, the combined constellation x is obtained through $x_1$ as follows:

$$x = sign1\left(real(x_1)\right) + sign2\left(imag(x_1)\right)$$

where real() denotes an operation for obtaining the real part, imag() denotes an operation for obtaining the imaginary part, sign1 and sign2 are as follows:

$$\mathrm{si}\,gn1 = e^{j\varphi_0\pi}$$

$$\mathrm{si}\,gn2 = e^{j(\varphi_1+1/2)\pi}$$

In this case, $\varphi_0$, $\varphi_1$ may be obtained through the first modulation bit sequence $bo(i)$, $b_0(i+1)$ as follows:

$$\varphi_0 = 1-b_0(i)$$

$$\varphi_1 = 1-b_0(i+1)$$

Alternatively, $\varphi_0$, $\varphi_1$ may be obtained through a QPSK symbol mapped by the first modulation bit sequence $bo(i)$, $b_0(i+1)$ as follows:

$$\varphi_0 = (sign(real(s_1))+1)/2$$

$$\varphi_1 = (sign(imag(s_1))+1)/2$$

where $s_1$ is the constellation point of the first modulation bit sequence $bo(i)$, $b_0(i+1)$, sign() denotes a sign function.

Example twenty-two

In this example, assuming that n=3 and a modulation scheme of the second modulation bit sequence is 16QAM, the first modulation bit sequence $bo(i)$, $b_0(i+1)$ and the second modulation bit sequence $bi(i)$, $b_1(i+1)$, $b_1(i+2)$, $b_1(i+3)$, that is, 6 bits in total, are jointly modulated and mapped to obtain a combined constellation x, where i is a natural number.
The first generation manner is adopted to generate the constellation point of the combined constellation x.

When the first transmission power radio is 32/42, then c is $\sqrt{5/21}$ and d is $2\sqrt{2/5}$, as shown in the following table:

| First transmission power radio | c | d |
|---|---|---|
| 32/42 | $\sqrt{5/21}$ | $2\sqrt{2/5}$ |

The modulation mapping relationship of the first bit sequence $b_0(i)$, $b_0(i+1)$ is as shown in the following table:

| bo(i), $b_0$(i+1) | I | Q |
|---|---|---|
| 00 | $1/\sqrt{2}$ | $1/\sqrt{2}$ |
| 01 | $1/\sqrt{2}$ | $-1/\sqrt{2}$ |
| 10 | $-1/\sqrt{2}$ | $1/\sqrt{2}$ |
| 11 | $-1/\sqrt{2}$ | $-1/\sqrt{2}$ |

Firstly, a constellation point $x_1$ in a third quadrant of the combined constellation x is obtained according to the following formula:

$$x_1 = \sqrt{5/21}\left((I - 2\sqrt{2/5}) + j(Q\text{-}2\sqrt{2/5})\right)$$

Secondly, the combined constellation x is obtained through $x_1$ as follows:

$$x = sign1\left(real(x_1)\right) + sign2\left(imag(x_1)\right)$$

where real() denotes an operation for obtaining the real part, imag() denotes an operation for obtaining the imaginary part, sign1 and sign2 are as follows:

$$si\,gn1 = e^{j\varphi_0\pi}$$

$$si\,gn2 = e^{j(\varphi_1+1/2)\pi}$$

In this case, $\varphi_0$, $\varphi_1$, bo(i), $b_0$(i+1) and a first modulation symbol si meet the following correspondence relationship:

| bo(i), $b_0$(i+1) | (sign(real($s_1$), sign(imag($s_1$))) | $\varphi_0$ | $\varphi_1$ |
|---|---|---|---|
| 00 | (1,1) | 1 | 1 |
| 01 | (1,-1) | 1 | 0 |
| 10 | (-1,1) | 0 | 1 |
| 11 | (-1,-1) | 0 | 0 |

Example twenty-three

In this example, assuming that n=3 and a modulation scheme of the second modulation bit sequence is 16QAM, the first modulation bit sequence $b_0$(i), $b_0$(i+1) and the second modulation bit sequence bi (i), $b_1$(i+1), $b_1$(i+2), $b_1$(i+3), that is, 6 bits in total, are jointly modulated and mapped to obtain a combined constellation x, where i is a natural number.
The first generation manner is adopted to generate the constellation point of the combined constellation x.

When the second transmission power radio is 144.5/167, then c is $3\sqrt{5/334}$ and d is $17/(3\sqrt{10})$, as shown in the following table:

| Second transmission power radio | c | d |
|---|---|---|
| 144.5/167 | $3\sqrt{5/334}$ | $17/(3\sqrt{10})$ |

The modulation mapping relationship of the first bit sequence bo(i), $b_0(i+1)$ is as shown in the following table:

| bo(i), $b_0(i+1)$ | $I$ | $Q$ |
|---|---|---|
| 00 | $1/\sqrt{2}$ | $1/\sqrt{2}$ |
| 01 | $1/\sqrt{2}$ | $-1/\sqrt{2}$ |
| 10 | $-1/\sqrt{2}$ | $1/\sqrt{2}$ |
| 11 | $-1/\sqrt{2}$ | $-1/\sqrt{2}$ |

Firstly, a constellation point $x_1$ in a third quadrant of the combined constellation x is obtained according to the following formula:

$$x_1 = 3\sqrt{5/334}\left((I - 17/(3\sqrt{10})) + j(Q\text{-}17/(3\sqrt{10}))\right)$$

Secondly, the combined constellation x is obtained through $x_1$ as follows:

$$x = sign1\left(real(x_1)\right) + sign2\left(imag(x_1)\right)$$

where real() denotes an operation for obtaining the real part, imag() denotes an operation for obtaining the imaginary part, sign1 and sign2 are as follows:

$$si\,gn1 = e^{j\varphi_0\pi}$$

$$si\,gn2 = e^{j(\varphi_1+1/2)\pi}$$

In this case, $\varphi_0$, $\varphi_1$, $b_0(i)$, $b_0(i+1)$ and a first modulation symbol $s_1$ meet the following correspondence relationship:

| bo(i), $b_0(i+1)$ | (sign(real($s_1$)), sign(imag($s_1$))) | $\varphi_0$ | $\varphi_1$ |
|---|---|---|---|
| 00 | (1,1) | 1 | 1 |
| 01 | (1,-1) | 1 | 0 |
| 10 | (-1,1) | 0 | 1 |
| 11 | (-1,-1) | 0 | 0 |

Example twenty-four

In this example, assuming that n=3 and a modulation scheme of the second modulation bit sequence is 16QAM, the first modulation bit sequence bo(i), $b_0(i+1)$ and the second modulation bit sequence $b_1(i)$, $b_1(i+1)$, $b_1(i+2)$, $b_1(i+3)$, that is, 6 bits in total, are jointly modulated and mapped to obtain a combined constellation x, where i is a natural number.
The first generation manner is adopted to generate the constellation point of the combined constellation x.

When the third transmission power radio is 128/138, c is $\sqrt{5/69}$ and d is $4\sqrt{2/5}$, as shown in the following table:

| Third transmission power radio | c | d |
|---|---|---|
| 128/138 | $\sqrt{5/69}$ | $4\sqrt{2/5}$ |

The modulation mapping relationship of the first bit sequence $bo(i)$, $b_0(i+1)$ is as shown in the following table:

| $bo(i)$, $b_0(i+1)$ | I | Q |
|---|---|---|
| 00 | $1/\sqrt{2}$ | $1/\sqrt{2}$ |
| 01 | $1/\sqrt{2}$ | $-1/\sqrt{2}$ |
| 10 | $-1/\sqrt{2}$ | $1/\sqrt{2}$ |
| 11 | $-1/\sqrt{2}$ | $-1/\sqrt{2}$ |

Firstly, a constellation point $x_1$ in a third quadrant of the combined constellation x is obtained according to the following formula:

$$x_1 = \sqrt{5/69}\left((I - 4\sqrt{2/5}) + \text{j}(Q-4\sqrt{2/5})\right)$$

Secondly, the combined constellation x is obtained through $x_1$ as follows:

$$x = sign1\left(real(x_1)\right) + sign2\left(imag(x_1)\right)$$

where real() denotes an operation for obtaining the real part, imag() denotes an operation for obtaining the imaginary part, sign1 and sign2 are as follows:

$$si\,gn1 = e^{j\varphi_0\pi}$$

$$si\,gn2 = e^{j(\varphi_1+1/2)\pi}$$

In this case, $\varphi_0$, $\varphi_1$, $bo(i)$, $b_0(i+1)$ and a first modulation symbol si meet the following correspondence relationship:

| $bo(i)$, $b_0(i+1)$ | (sign(real($s_1$), sign(imag($s_1$))) | $\varphi_0$ | $\varphi_1$ |
|---|---|---|---|
| 00 | (1,1) | 1 | 1 |
| 01 | (1,-1) | 1 | 0 |
| 10 | (-1,1) | 0 | 1 |
| 11 | (-1,-1) | 0 | 0 |

Example twenty-five

In this example, assuming that n=3 and a modulation scheme of the second modulation bit sequence is 16QAM, the first modulation bit sequence $bo(i)$, $b_0(i+1)$ and the second modulation bit sequence $b_1(i)$, $b_1(i+1)$, $b_1(i+2)$, $b_1(i+3)$, that is, 6 bits in total, are jointly modulated and mapped to obtain a combined constellation x, where i is a natural number.
The second generation manner is adopted to generate the constellation point of the combined constellation x.

When the first transmission power radio is 32/42, then $c_2$ is $-\sqrt{5/21}$ and $d_2$ is $-2\sqrt{2/5}$, as shown in the following table:

| First transmission power radio | $c_2$ | $d_2$ |
|---|---|---|
| 32/42 | $-\sqrt{5/21}$ | $-2\sqrt{2/5}$ |

The modulation mapping relationship of the first bit sequence bo(i), $b_0(i+1)$ is as shown in the following table:

| $b_0(i), b_0(i+1)$ | $I$ | $Q$ |
|---|---|---|
| 00 | $1/\sqrt{2}$ | $1/\sqrt{2}$ |
| 01 | $1/\sqrt{2}$ | $-1/\sqrt{2}$ |
| 10 | $-1/\sqrt{2}$ | $1/\sqrt{2}$ |
| 11 | $-1/\sqrt{2}$ | $-1/\sqrt{2}$ |

Firstly, a constellation point $x_2$ in a first quadrant of the combined constellation x is obtained according to the following formula:

$$x_2 = -\sqrt{5/21}\left(\left(I - 2\sqrt{2/5}\right) + j(Q\text{-}2\sqrt{2/5})\right)$$

Secondly, the combined constellation x is obtained through $x_1$ as follows:

$$x = sign1 \times \left(real(x_2)\right) + sign2 \times \left(imag(x_2)\right)$$

where real() denotes an operation for obtaining the real part, imag() denotes an operation for obtaining the imaginary part, sign1 and sign2 are obtained according to the following formulas:

$$sign1 = (-1)^{b_0(i)}$$

$$sign2 = j \times (-1)^{b_0(i+1)}$$

Alternatively, sign1 and sign2 are obtained according to the following formulas:

$$sign1 = sign(real(s_1))$$

$$sign2 = j \times sign(imag(s_1))$$

where $s_1$ is the constellation point of the first modulation bit sequence bo(i), $b_0(i+1)$, sign() denotes a sign function.

Example twenty-six

In this example, assuming that n=3 and a modulation scheme of the second modulation bit sequence is 16QAM, the first modulation bit sequence bo(i), $b_0$(i+1) and the second modulation bit sequence bi (i), $b_1$(i+1), $b_1$(i+2), $b_1$(i+3), that is, 6 bits in total, are jointly modulated and mapped to obtain a combined constellation x, where i is a natural number.

The second generation manner is adopted to generate the constellation point of the combined constellation x.

When the second transmission power radio is 144.5/167, then $c_2$ is $-3\sqrt{5/334}$ and $d_2$ is - $17/(3\sqrt{10})$, as shown in the following table:

| Second transmission power radio | C2 | $d_2$ |
|---|---|---|
| 144.5/167 | $-3\sqrt{5/334}$ | $-17/(3\sqrt{10})$ |

The modulation mapping relationship of the first bit sequence bo(i), $b_0$(i+1) is as shown in the following table:

| bo(i), $b_0$(i+1) | I | Q |
|---|---|---|
| 00 | $1/\sqrt{2}$ | $1/\sqrt{2}$ |
| 01 | $1/\sqrt{2}$ | $-1/\sqrt{2}$ |
| 10 | $-1/\sqrt{2}$ | $1/\sqrt{2}$ |
| 11 | $-1/\sqrt{2}$ | $-1/\sqrt{2}$ |

Firstly, a constellation point $x_2$ in a first quadrant of the combined constellation x is obtained according to the following formula:

$$x_2 = -3\sqrt{5/334}\left((I - 17/(3\sqrt{10})) + j(Q\text{-}17/(3\sqrt{10}))\right)$$

Secondly, the combined constellation x is obtained through $x_2$ according to the following formula:

$$x = sign1\times\left(real(x_2)\right) + sign2\times\left(imag(x_2)\right)$$

where real() denotes an operation for obtaining the real part, imag() denotes an operation for obtaining the imaginary part, sign1 and sign2 are obtained according to the following formulas:

$$sign1 = (-1)^{b_0(i)}$$

$$sign2 = j\times(-1)^{b_0(i+1)}$$

Alternatively, sign1 and sign2 are obtained according to the following formulas:

$$sign1 = sign(real(s_1))$$

$$sign2 = j\times sign(imag(s_1))$$

where $s_1$ is the constellation point of the first modulation bit sequence bo(i), $b_0$(i+1), sign() denotes a sign function.

Example twenty-seven

In this example, assuming that n=3 and a modulation scheme of the second modulation bit sequence is 16QAM, the first modulation bit sequence $b_0(i)$, $b_0(i+1)$ and the second modulation bit sequence $b(i)$, $b_1(i+1)$, $b_1(i+2)$, $b_1(i+3)$, that is, 6 bits in total, are jointly modulated and mapped to obtain a combined constellation x, where i is a natural number.
The second generation manner is adopted to generate the constellation point of the combined constellation x.

When the third transmission power radio is 128/138, $c_2$ is $-\sqrt{5/69}$ and $d_2$ is $-4\sqrt{2/5}$, as shown in the following table:

| Third transmission power radio | $c_2$ | $d_2$ |
|---|---|---|
| 128/138 | $-\sqrt{5/69}$ | $-4\sqrt{2/5}$ |

The modulation mapping relationship of the first bit sequence $b_0(i)$, $b_0(i+1)$ is as shown in the following table:

| $b_0(i)$, $b_0(i+1)$ | $I$ | $Q$ |
|---|---|---|
| 00 | $1/\sqrt{2}$ | $1/\sqrt{2}$ |
| 01 | $1/\sqrt{2}$ | $-1/\sqrt{2}$ |
| 10 | $-1/\sqrt{2}$ | $1/\sqrt{2}$ |
| 11 | $-1/\sqrt{2}$ | $-1/\sqrt{2}$ |

Firstly, a constellation point $x_2$ in a first quadrant of the combined constellation x is obtained according to the following formula:

$$x_2 = -\sqrt{5/69}\left((I - 4/\sqrt{2/5}) + j(Q - 4/\sqrt{2/5})\right)$$

Secondly, the combined constellation x is obtained through $x_2$ according to the following formula:

$$x = sign1 \times \left(real(x_2)\right) + sign2 \times \left(imag(x_2)\right)$$

where real() denotes an operation for obtaining the real part, imag() denotes an operation for obtaining the imaginary part, sign1 and sign2 are obtained through the following formulas:

$$sign1 = (-1)^{b_0(i)}$$

$$sign2 = j \times (-1)^{b_0(i+1)}$$

Alternatively, sign1 and sign2 are obtained according to the following formulas:

$$sign1 = sign(real(s_1))$$

$$sign2 = j \times sign(imag(s_1))$$

where $s_1$ is the constellation point of the first modulation bit sequence bo(i), $b_0$(i+1), sign() denotes a sign function.

Example twenty-eight

In this example, assuming that n=3 and a modulation scheme of the second modulation bit sequence is 16QAM, the first modulation bit sequence bo(i), $b_0$(i+1) and the second modulation bit sequence bi(i), $b_1$(i+1), $b_1$(i+2), $b_1$(i+3), that is, 6 bits in total, are jointly modulated and mapped to obtain a combined constellation x, where i is a natural number.
The second generation manner is adopted to generate the constellation point of the combined constellation x.

When the first transmission power radio is 32/42, then $c_2$ is $-\sqrt{5/21}$ and $d_2$ is $-2\sqrt{2/5}$, as shown in the following table:

| First transmission power radio | $c_2$ | $d_2$ |
|---|---|---|
| 32/42 | $-\sqrt{5/21}$ | $-2\sqrt{2/5}$ |

The modulation mapping relationship of the first bit sequence bo(i), $b_0$(i+1) is as shown in the following table:

| bo(i), $b_0$(i+1) | I | Q |
|---|---|---|
| 00 | $1/\sqrt{2}$ | $1/\sqrt{2}$ |
| 01 | $1/\sqrt{2}$ | $-1/\sqrt{2}$ |
| 10 | $-1/\sqrt{2}$ | $1/\sqrt{2}$ |
| 11 | $-1/\sqrt{2}$ | $-1/\sqrt{2}$ |

Firstly, a constellation point $x_2$ in a first quadrant of the combined constellation x is obtained according to the following formula:

$$x_2 = -\sqrt{5/21}\left(\left(I - 2\sqrt{2/5}\right) + j(Q - 2\sqrt{2/5})\right)$$

Secondly, the combined constellation x is obtained through $x_2$ as follows:

$$x = sign1 \times \left(real(x_2)\right) + sign2 \times \left(imag(x_2)\right)$$

where real() denotes an operation for obtaining the real part, imag() denotes an operation for obtaining the imaginary part, sign1 and sign2 are as follows:

$$sign1 = e^{j\varphi_0\pi}$$

$$sign2 = e^{j(\varphi_1 + 1/2)\pi}$$

In this case, $\varphi_0$, $\varphi_1$ may be obtained by the first modulation bit sequence bo(i), $b_0$(i+1) as follows:

$$\varphi_0 = b_0(i)$$

$$\varphi_1 = b_0(i+1)$$

Alternatively, $\varphi_0$, $\varphi_1$ may be obtained by a QPSK symbol mapped by the first modulation bit sequence bo(i), $b_0(i+1)$ as follows:

$$\varphi_0 = (1 - sign(real(s_1)))/2$$

$$\varphi_1 = (1 - sign(imag(s_1)))/2$$

where $s_1$ is the constellation point of the first modulation bit sequence bo(i), $b_0(i+1)$, sign() denotes a sign function.

Example twenty-nineteen

In this example, assuming that n=3 and a modulation scheme of the second modulation bit sequence is 16QAM, the first modulation bit sequence bo(i), $b_0(i+1)$ and the second modulation bit sequence bi(i), $b_1(i+1)$, $b_1(i+2)$, $b_1(i+3)$, that is, 6 bits in total, are jointly modulated and mapped to obtain a combined constellation x, where i is a natural number.

The second generation manner is adopted to generate the constellation point of the combined constellation x.

When the second transmission power radio is 144.5/167, then $c_2$ is $-3\sqrt{5/334}$ and $d_2$ is $-17/(3\sqrt{10})$, as shown in the following table:

| Second transmission power radio | $c_2$ | $d_2$ |
|---|---|---|
| 144.5/167 | $-3\sqrt{5/334}$ | $-17/(3\sqrt{10})$ |

The modulation mapping relationship of the first bit sequence bo(i), $b_0(i+1)$ is as shown in the following table:

| bo(i), $b_0(i+1)$ | $I$ | $Q$ |
|---|---|---|
| 00 | $1/\sqrt{2}$ | $1/\sqrt{2}$ |
| 01 | $1/\sqrt{2}$ | $-1/\sqrt{2}$ |
| 10 | $-1/\sqrt{2}$ | $1/\sqrt{2}$ |
| 11 | $-1/\sqrt{2}$ | $-1/\sqrt{2}$ |

Firstly, a constellation point $x_2$ in a first quadrant of the combined constellation x is obtained according to the following formula:

$$x_2 = -3\sqrt{5/334}\left((I-17/(3\sqrt{10})) + j(Q-17/(3\sqrt{10}))\right)$$

Secondly, the combined constellation x is obtained through $x_2$ according to the following formula:

$$x = sign1 \times (real(x_2)) + sign2 \times (imag(x_2))$$

where real() denotes an operation for obtaining the real part, imag() denotes an operation for obtaining the imaginary part, sign1 and sign2 are obtained according to the following formulas:

$$\mathrm{si}\,gn1 = e^{j\varphi_0\pi}$$

$$\mathrm{si}\,gn2 = e^{j(\varphi_1+1/2)\pi}$$

$\varphi_0$, $\varphi_1$ may be obtained by the first modulation bit sequence bo(i), $b_0$(i+1) as follows:

$$\varphi_0 = b_0(i)$$

$$\varphi_1 = b_0(i+1)$$

Alternatively, $\varphi_0$, $\varphi_1$ may be obtained by a QPSK symbol mapped by the first modulation bit sequence bo(i), $b_0$(i+1) as follows:

$$\varphi_0 = (1 - sign(real(s_1)))/2$$

$$\varphi_1 = (1 - sign(imag(s_1)))/2$$

where $s_1$ is the constellation point of the first modulation bit sequence bo(i), $b_0$(i+1), sign() denotes a sign function.

<u>Example thirty</u>

In this example, assuming that n=3 and a modulation scheme of the second modulation bit sequence is 16QAM, the first modulation bit sequence bo(i), $b_0$(i+1) and the second modulation bit sequence bi(i), $b_1$(i+1), $b_1$(i+2), $b_1$(i+3), that is, 6 bits in total, are jointly modulated and mapped to obtain a combined constellation x, where i is a natural number.
The second generation manner is adopted to generate the constellation point of the combined constellation x.

When the third transmission power radio is 128/138, $c_2$ is $-\sqrt{5/69}$ and $d_2$ is $-4\sqrt{2/5}$, as shown in the following table:

| Third transmission power radio | $c_2$ | $d_2$ |
|---|---|---|
| 128/138 | $-\sqrt{5/69}$ | $-4\sqrt{2/5}$ |

The modulation mapping relationship of the first bit sequence bo(i), $b_0$(i+1) is as shown in the following table:

| bo(i), $b_0$(i+1) | I | Q |
|---|---|---|
| 00 | $1/\sqrt{2}$ | $1/\sqrt{2}$ |
| 01 | $1/\sqrt{2}$ | $-1/\sqrt{2}$ |
| 10 | $-1/\sqrt{2}$ | $1/\sqrt{2}$ |
| 11 | $-1/\sqrt{2}$ | $-1/\sqrt{2}$ |

Firstly, a constellation point $x_2$ in a first quadrant of the combined constellation x is obtained according to the following formula:

$$x_2 = -\sqrt{5/69}\left((I - 4/\sqrt{2/5}) + j(Q\text{-}4/\sqrt{2/5})\right)$$

Secondly, the combined constellation x is obtained through $x_2$ according to the following formula:

$$x = sign1 \times \left(real(x_2)\right) + sign2 \times \left(imag(x_2)\right)$$

where real() denotes an operation for obtaining the real part, imag() denotes an operation for obtaining the imaginary part, sign1 and sign2 are obtained through the following formulas:

$$si\,gn1 = e^{j\varphi_0\pi}$$

$$si\,gn2 = e^{j(\varphi_1 + 1/2)\pi}$$

$\varphi_0$, $\varphi_1$ may be obtained by the first modulation bit sequence $bo(i)$, $b_0(i+1)$ as follows:

$$\varphi_0 = b_0\,(i)$$

$$\varphi_1 = b_0(i+1)$$

Alternatively, $\varphi_0$, $\varphi_1$ may be obtained by a QPSK symbol mapped by the first modulation bit sequence $bo(i)$, $b_0(i+1)$ as follows:

$$\varphi_0 = (1 - sign(real(s_1)))/2$$

$$\varphi_1 = (1 - sign(imag(s_1)))/2$$

where $s_1$ is the constellation point of the first modulation bit sequence $bo(i)$, $b_0(i+1)$, sign() denotes a sign function.

Example thirty-one

In this example, assuming that n=5 and a modulation scheme of the second modulation bit sequence is 64QAM, the first modulation bit sequence $bo(i)$, $b_0(i+1)$ and the second modulation bit sequence $bi(i)$, $b_1(i+1)$, $b_1(i+2)$, $b_1(i+3)$, $b_1(i+4)$, $b_1(i+5)$, that is, 8 bits in total are jointly modulated and mapped to obtain a combined constellation x, where i is a natural number.

The first generation manner is adopted to generate the constellation point of the combined constellation x.

When the first transmission power radio is 128/170, c is $\sqrt{21/85}$ and d is $4\sqrt{2/21}$, as shown in the following table:

| First transmission power radio | c | d |
|---|---|---|
| 128/170 | $\sqrt{21/85}$ | $4\sqrt{2/21}$ |

The modulation mapping relationship of the first bit sequence $bo(i)$, $b_0(i+1)$ is as shown in the following table:

| $b_0(i)$, $b_0(i+1)$ | $I$ | $Q$ |
|---|---|---|
| 00 | $1/\sqrt{2}$ | $1/\sqrt{2}$ |
| 01 | $1/\sqrt{2}$ | $-1/\sqrt{2}$ |
| 10 | $-1/\sqrt{2}$ | $1/\sqrt{2}$ |
| 11 | $-1/\sqrt{2}$ | $-1/\sqrt{2}$ |

Firstly, a constellation point $x_1$ in a third quadrant of the combined constellation x is obtained according to the following formula:

$$x_1 = \sqrt{21/85}\left((I - 4\sqrt{2/21}) + j(Q - 4\sqrt{2/21})\right)$$

Secondly, the combined constellation x is obtained through $x_1$ as follows:

$$x = sign1\left(real(x_1)\right) + sign2\left(imag(x_1)\right)$$

where real() denotes an operation for obtaining the real part, imag() denotes an operation for obtaining the imaginary part, sign1 and sign2 are obtained by the following formulas:

$$sign1 = (-1)^{(1-b_0(i))}$$

$$sign2 = j \times (-1)^{(1-b_0(i+1))}$$

Alternatively, sign1 and sign2 are obtained according to the following formulas:

$$sign1 = sign3(sign(real(s_1)))$$

$$sign2 = j \times sign3(sign(imag(s_1)))$$

where $s_1$ is the constellation point of the first modulation bit sequence $b_0(i)$, $b_0(i+1)$, sign() denotes a sign function, sign3() denotes an inverse function of the sign function.

Example thirteen-two

In this example, assuming that n=5 and a modulation scheme of the second modulation bit sequence is 64QAM, the first modulation bit sequence $b_0(i)$, $b_0(i+1)$ and the second modulation bit sequence $b_1(i)$, $b_1(i+1)$, $b_1(i+2)$, $b_1(i+3)$, $b_1(i+4)$, $b_1(i+5)$, that is, 8 bits in total are jointly modulated and mapped to obtain a combined constellation x, where i is a natural number.
The first generation manner is adopted to generate the constellation point of the combined constellation x.

When the second transmission power radio is 40.5/51, then c is $\sqrt{7/34}$ and d is $3\sqrt{3/14}$, as shown in the following table:

| Second transmission power radio | c | d |
|---|---|---|
| 40.5/51 | $\sqrt{7/34}$ | $3\sqrt{3/14}$ |

The modulation mapping relationship of the first bit sequence bo(i), $b_0$(i+1) is as shown in the following table:

| bo(i), $b_0$(i+1) | I | Q |
|---|---|---|
| 00 | $1/\sqrt{2}$ | $1/\sqrt{2}$ |
| 01 | $1/\sqrt{2}$ | $-1/\sqrt{2}$ |
| 10 | $-1/\sqrt{2}$ | $1/\sqrt{2}$ |
| 11 | $-1/\sqrt{2}$ | $-1/\sqrt{2}$ |

Firstly, a constellation point $x_1$ in a third quadrant of the combined constellation x is obtained according to the following formula:

$$x_1 = \sqrt{7/34}\left((I - 3\sqrt{3/14}) + j(Q\text{-}3\sqrt{3/14})\right)$$

Secondly, the combined constellation x is obtained through $x_1$ as follows:

$$x = sign1\left(real(x_1)\right) + sign2\left(imag(x_1)\right)$$

where real() denotes an operation for obtaining the real part, imag() denotes an operation for obtaining the imaginary part, sign1 and sign2 are obtained by the following formulas:

$$sign1 = (-1)^{(1-b_0(i))}$$

$$sign2 = j \times (-1)^{(1-b_0(i+1))}$$

Alternatively, sign1 and sign2 are obtained according to the following formulas:

$$sign1 = sign3(sign(real(s_1)))$$

$$sign2 = j \times sign3(sign(imag(s_1)))$$

where $s_1$ is the constellation point of the first modulation bit sequence $b_0$(i), $b_0$(i+1), sign() denotes a sign function, sign3 denotes an inverse function of the sign function.

Example thirty-three

In this example, assuming that n=5 and a modulation scheme of the second modulation bit sequence is 64QAM, the first modulation bit sequence bo(i), $b_0$(i+1) and the second modulation bit sequence bi(i), $b_1$(i+1), $b_1$(i+2), $b_1$(i+3),$b_1$(i+4), $b_1$(i+5), that is, 8 bits in total, are jointly modulated and mapped to obtain a combined constellation x, where i is a natural number.

43

The first generation manner is adopted to generate the constellation point of the combined constellation x.

When the third transmission power radio is 288/330, then c is $\sqrt{7/55}$ and d is $2\sqrt{6/7}$ , as shown in the following table:

| Third transmission power radio | c | d |
|---|---|---|
| 288/330 | $\sqrt{7/55}$ | $2\sqrt{6/7}$ |

The modulation mapping relationship of the first bit sequence bo(i), $b_0$(i+1) is as shown in the following table:

| bo(i), $b_0$(i+1) | I | Q |
|---|---|---|
| 00 | $1/\sqrt{2}$ | $1/\sqrt{2}$ |
| 01 | $1/\sqrt{2}$ | $-1/\sqrt{2}$ |
| 10 | $-1/\sqrt{2}$ | $1/\sqrt{2}$ |
| 11 | $-1/\sqrt{2}$ | $-1/\sqrt{2}$ |

Firstly, a constellation point $x_1$ in a third quadrant of the combined constellation x is obtained according to the following formula:

$$x_1 = \sqrt{7/55}\left((I - 2\sqrt{6/7}) + \text{j}(Q\text{-}2\sqrt{6/7})\right)$$

Secondly, the combined constellation x is obtained through $x_1$ as follows:

$$x = sign1\left(real(x_1)\right) + sign2\left(imag(x_1)\right)$$

where real() denotes an operation for obtaining the real part, imag() denotes an operation for obtaining the imaginary part, sign1 and sign2 are obtained by the following formulas:

$$sign1 = (-1)^{(1-b_0(i))}$$

$$sign2 = j \times (-1)^{(1-b_0(i+1))}$$

Alternatively, sign1 and sign2 are obtained according to the following formulas:

$$sign1 = sign3(sign(real(s_1)))$$

$$sign2 = j \times sign3(sign(imag(s_1)))$$

where $s_1$ is the constellation point of the first modulation bit sequence bo(i), $b_0$(i+1), sign() denotes a sign function, sign3() denotes an inverse function of the sign function.

Example thirty-four

In this example, assuming that n=5 and a modulation scheme of the second modulation bit sequence is 64QAM, the first modulation bit sequence bo(i), $b_0$(i+1) and the second modulation bit sequence bi(i), $b_1$(i+1), $b_1$(i+2), $b_1$(i+3),$b_1$(i+4), $b_1$(i+5), that is, 8 bits in total, are jointly modulated and mapped to obtain a combined constellation x, where i is a natural number.

The first generation manner is adopted to generate the constellation point of the combined constellation x.

When the first transmission power radio is 128/170, c is $\sqrt{21/85}$ and d is $4\sqrt{2/21}$, as shown in the following table:

| First transmission power radio | c | d |
|---|---|---|
| 128/170 | $\sqrt{21/85}$ | $4\sqrt{2/21}$ |

The modulation mapping relationship of the first bit sequence bo(i), $b_0$(i+1) is as shown in the following table:

| bo(i), $b_0$(i+1) | I | Q |
|---|---|---|
| 00 | $1/\sqrt{2}$ | $1/\sqrt{2}$ |
| 01 | $1/\sqrt{2}$ | $-1/\sqrt{2}$ |
| 10 | $-1/\sqrt{2}$ | $1/\sqrt{2}$ |
| 11 | $-1/\sqrt{2}$ | $-1/\sqrt{2}$ |

Firstly, a constellation point $x_1$ in a third quadrant of the combined constellation x is obtained according to the following formula:

$$x_1 = \sqrt{21/85}\left((I - 4\sqrt{2/21}) + j(Q - 4\sqrt{2/21})\right)$$

Secondly, the combined constellation x is obtained through xias follows:

$$x = sign1\left(real(x_1)\right) + sign2\left(imag(x_1)\right)$$

where real() denotes an operation for obtaining the real part, imag() denotes an operation for obtaining the imaginary part, sign1 and sign2 are:

$$si\,gn1 = e^{j\varphi_0\pi}$$

$$si\,gn2 = e^{j(\varphi_1+1/2)\pi}$$

$\varphi_0$, $\varphi_1$ may be obtained by the first modulation bit sequence bo(i), $b_0$(i+1) as follows:

$$\varphi_0 = 1-b_0(i)$$

$$\varphi_1 = 1 - b_0(i+1)$$

Alternatively, $\varphi_0$, $\varphi_1$ may be obtained by a QPSK symbol mapped by the first modulation bit sequence bo(i), $b_0(i+1)$ as follows:

$$\varphi_0 = (sign(real(s_1)) + 1) / 2$$

$$\varphi_1 = (sign(imag(s_1)) + 1) / 2$$

where $s_1$ is the constellation point of the first modulation bit sequence bo(i), $b_0(i+1)$, sign() denotes a sign function.

Example thirty-five

In this example, assuming that n=5 and a modulation scheme of the second modulation bit sequence is 64QAM, the first modulation bit sequence bo(i), $b_0(i+1)$ and the second modulation bit sequence bi(i), $b_1(i+1)$, $b_1(i+2)$, $b_1(i+3)$, $b_1(i+4)$, $b_1(i+5)$, that is, 8 bits in total, are jointly modulated and mapped to obtain a combined constellation x, where i is a natural number.

The first generation manner is adopted to generate the constellation point of the combined constellation x.

When the second transmission power radio is 40.5/51, then c is $\sqrt{7/34}$ and d is $3\sqrt{3/14}$, as shown in the following table:

| Second transmission power radio | c | d |
|---|---|---|
| 40.5/51 | $\sqrt{7/34}$ | $3\sqrt{3/14}$ |

The modulation mapping relationship of the first bit sequence $b_0(i)$, $b_0(i+1)$ is as shown in the following table:

| $b_0(i)$, $b_0(i+1)$ | I | Q |
|---|---|---|
| 00 | $1/\sqrt{2}$ | $1/\sqrt{2}$ |
| 01 | $1/\sqrt{2}$ | $-1/\sqrt{2}$ |
| 10 | $-1/\sqrt{2}$ | $1/\sqrt{2}$ |
| 11 | $-1/\sqrt{2}$ | $-1/\sqrt{2}$ |

Firstly, a constellation point $x_1$ in a third quadrant of the combined constellation x is obtained according to the following formula:

$$x_1 = \sqrt{7/34}\left((I - 3\sqrt{3/14}) + j(Q - 3\sqrt{3/14})\right)$$

Secondly, the combined constellation x is obtained through $x_1$ as follows:

$$x = sign1\big(real(x_1)\big) + sign2\big(imag(x_1)\big)$$

where real() denotes an operation for obtaining the real part, imag() denotes an operation for obtaining the imaginary part, sign1 and sign2 are:

$$si\,gn1 = e^{j\varphi_0 \pi}$$

$$si\,gn2 = e^{j(\varphi_1 + 1/2)\pi}$$

$\varphi_0$, $\varphi_1$ may be obtained by the first modulation bit sequence bo(i), $b_0$(i+1) as follows:

$$\varphi_0 = 1 - b_0(i)$$

$$\varphi_1 = 1 - b_0(i+1)$$

Alternatively, $\varphi_0$, $\varphi_1$ may be obtained by a QPSK symbol mapped by the first modulation bit sequence bo(i), $b_0$(i+1) as follows:

$$\varphi_0 = (sign(real(s_1)) + 1) / 2$$

$$\varphi_1 = (sign(imag(s_1)) + 1) / 2$$

where $s_1$ is the constellation point of the first modulation bit sequence bo(i), $b_0$(i+1), sign() denotes a sign function.

Example thirty-six

In this example, assuming that n=5 and a modulation scheme of the second modulation bit sequence is 64QAM, the first modulation bit sequence bo(i), $b_0$(i+1) and the second modulation bit sequence bi (i), $b_1$(i+1), $b_1$(i+2), $b_1$(i+3),$b_1$(i+4), $b_1$(i+5), that is, 8 bits in total, are jointly modulated and mapped to obtain a combined constellation x, where i is a natural number.

The first generation manner is adopted to generate the constellation point of the combined constellation x.

When the third transmission power radio is 288/330, then c is $\sqrt{7/55}$ and d is $2\sqrt{6/7}$, as shown in the following table:

| Third transmission power radio | c | d |
|---|---|---|
| 288/330 | $\sqrt{7/55}$ | $2\sqrt{6/7}$ |

The modulation mapping relationship of the first bit sequence bo(i), $b_0$(i+1) is as shown in the following table:

| bo(i), $b_0$(i+1) | I | Q |
|---|---|---|
| 00 | $1/\sqrt{2}$ | $1/\sqrt{2}$ |
| 01 | $1/\sqrt{2}$ | $-1/\sqrt{2}$ |

(continued)

| bo(i), $b_0$(i+1) | I | Q |
|---|---|---|
| 10 | $-1/\sqrt{2}$ | $1/\sqrt{2}$ |
| 11 | $-1/\sqrt{2}$ | $-1/\sqrt{2}$ |

Firstly, a constellation point $x_1$ in a third quadrant of the combined constellation x is obtained according to the following formula:

$$x_1 = \sqrt{7/55}\left((I - 2\sqrt{6/7}) + \mathrm{j}(Q\text{-}2\sqrt{6/7})\right)$$

Secondly, the combined constellation x is obtained by $x_1$:

$$x = sign1\big(real(x_1)\big) + sign2\big(imag(x_1)\big)$$

where real() denotes an operation for obtaining the real part, imag() denotes an operation for obtaining the imaginary part, sign1 and sign2 are:

$$\mathrm{si}\,gn1 = e^{j\varphi_0\pi}$$

$$\mathrm{si}\,gn2 = e^{j(\varphi_1+1/2)\pi}$$

$\varphi_0$, $\varphi_1$ may be obtained by the first modulation bit sequence $b_0$(i), $b_0$(i+1):

$$\varphi_0 = 1\text{-}b_0(i)$$

$$\varphi_1 = 1\text{-}b_0(i+1)$$

Alternatively, $\varphi_0$, $\varphi_1$ may be obtained by a QPSK symbol mapped by the first modulation bit sequence bo(i), $b_0$(i+1):

$$\varphi_0 = (sign(real(s_1)) + 1)/2$$

$$\varphi_1 = (sign(imag(s_1)) + 1)/2$$

where $s_1$ is the constellation point of the first modulation bit sequence bo(i), $b_0$(i+1), sign() denotes a sign function.

Example thirty-seven

In this example, assuming that n=5 and a modulation scheme of the second modulation bit sequence is 64QAM, the first modulation bit sequence bo(i), $b_0$(i+1) and the second modulation bit sequence bi(i), $b_1$(i+1), $b_1$(i+2), $b_1$(i+3),$b_1$(i+4), $b_1$(i+5), that is, 8 bits in total, are jointly modulated and mapped to obtain a combined constellation x, where i is a natural number.

The first generation manner is adopted to generate the constellation point of the combined constellation x.

When the first transmission power radio is 128/170, c is $\sqrt{21/85}$ and d is $4\sqrt{2/21}$, as shown in the following table:

| First transmission power radio | c | d |
|---|---|---|
| 128/170 | $\sqrt{21/85}$ | $4\sqrt{2/21}$ |

The modulation mapping relationship of the first bit sequence $b_0(i)$, $b_0(i+1)$ is as shown in the following table:

| $b_0(i)$, $b_0(i+1)$ | I | Q |
|---|---|---|
| 00 | $1/\sqrt{2}$ | $1/\sqrt{2}$ |
| 01 | $1/\sqrt{2}$ | $-1/\sqrt{2}$ |
| 10 | $-1/\sqrt{2}$ | $1/\sqrt{2}$ |
| 11 | $-1/\sqrt{2}$ | $-1/\sqrt{2}$ |

Firstly, a constellation point $x_1$ in a third quadrant of the combined constellation x is obtained according to the following formula:

$$x_1 = \sqrt{21/85}\left((I - 4\sqrt{2/21}) + j(Q - 4\sqrt{2/21})\right)$$

Secondly, the combined constellation x is obtained by $x_1$:

$$x = sign1\left(real(x_1)\right) + sign2\left(imag(x_1)\right)$$

where real() denotes an operation for obtaining the real part, imag() denotes an operation for obtaining the imaginary part, sign1 and sign2 are:

$$si\,gn1 = e^{j\varphi_0\pi}$$

$$si\,gn2 = e^{j(\varphi_1+1/2)\pi}$$

$\varphi_0$, $\varphi_1$, bo(i), $b_0(i+1)$ and a first modulation symbol $s_1$ meet the following correspondence relationship:

| bo(i), $b_0(i+1)$ | (sing(real($s_1$), sign(imag($s_1$))) | $\varphi_0$ | $\varphi_1$ |
|---|---|---|---|
| 00 | (1,1) | 1 | 1 |
| 01 | (1,-1) | 1 | 0 |
| 10 | (-1,1) | 0 | 1 |
| 11 | (-1,-1) | 0 | 0 |

Example thirty-eight

In this example, assuming that n=5 and a modulation scheme of the second modulation bit sequence is 64QAM, the first modulation bit sequence bo(i), $b_0(i+1)$ and the second modulation bit sequence bi(i), $b_1(i+1)$, $b_1(i+2)$,

$b_1(i+3), b_1(i+4), b_1(i+5)$, that is, 8 bits in total, are jointly modulated and mapped to obtain a combined constellation x, where i is a natural number.

The first generation manner is adopted to generate the constellation point of the combined constellation x.

When the second transmission power radio is 40.5/51, then c is $\sqrt{7/34}$ and d is $3\sqrt{3/14}$, as shown in the following table:

| Second transmission power radio | c | d |
|---|---|---|
| 40.5/51 | $\sqrt{7/34}$ | $3\sqrt{3/14}$ |

The modulation mapping relationship of the first bit sequence bo(i), $b_0(i+1)$ is as shown in the following table:

| bo(i), $b_0(i+1)$ | I | Q |
|---|---|---|
| 00 | $1/\sqrt{2}$ | $1/\sqrt{2}$ |
| 01 | $1/\sqrt{2}$ | $-1/\sqrt{2}$ |
| 10 | $-1/\sqrt{2}$ | $1/\sqrt{2}$ |
| 11 | $-1/\sqrt{2}$ | $-1/\sqrt{2}$ |

Firstly, a constellation point $x_1$ in a third quadrant of the combined constellation x is obtained according to the following formula:

$$x_1 = \sqrt{7/34}\left((I - 3\sqrt{3/14}) + j(Q\text{-}3\sqrt{3/14})\right)$$

Secondly, the combined constellation x is obtained by $x_1$:

$$x = sign1\left(real(x_1)\right) + sign2\left(imag(x_1)\right)$$

where real() denotes an operation for obtaining the real part, imag() denotes an operation for obtaining the imaginary part, sign1 and sign2 are:

$$si\,gn1 = e^{j\varphi_0\pi}$$

$$si\,gn2 = e^{j(\varphi_1+1/2)\pi}$$

$\varphi_0$, $\varphi_1$, bo(i), $b_0(i+1)$ and a first modulation symbol si meet the following correspondence relationship:

| bo(i), $b_0(i+1)$ | (sing(real($s_1$), sign(imag($s_1$))) | $\varphi_0$ | $\varphi_1$ |
|---|---|---|---|
| 00 | (1,1) | 1 | 1 |
| 01 | (1,-1) | 1 | 0 |
| 10 | (-1,1) | 0 | 1 |
| 11 | (-1,-1) | 0 | 0 |

Example thirty-nine

In this example, assuming that n=5 and a modulation scheme of the second modulation bit sequence is 64QAM the first modulation bit sequence $b_0(i)$, $b_0(i+1)$ and the second modulation bit sequence $b_i(i)$, $b_1(i+1)$, $b_1(i+2)$, $b_1(i+3)$,$b_1(i+4)$, $b_1(i+5)$, that is, 8 bits in total, are jointly modulated and mapped to obtain a combined constellation x, where i is a natural number.

The first generation manner is adopted to generate the constellation point of the combined constellation x.

When the third transmission power radio is 288/330, then c is $\sqrt{7/55}$ and d is $2\sqrt{6/7}$, as shown in the following table:

| Third transmission power radio | c | d |
|---|---|---|
| 288/330 | $\sqrt{7/55}$ | $2\sqrt{6/7}$ |

The modulation mapping relationship of the first bit sequence $b_0(i)$, $b_0(i+1)$ is as shown in the following table:

| $b_0(i)$, $b_0(i+1)$ | I | Q |
|---|---|---|
| 00 | $1/\sqrt{2}$ | $1/\sqrt{2}$ |
| 01 | $1/\sqrt{2}$ | $-1/\sqrt{2}$ |
| 10 | $-1/\sqrt{2}$ | $1/\sqrt{2}$ |
| 11 | $-1/\sqrt{2}$ | $-1/\sqrt{2}$ |

Firstly, a constellation point $x_1$ in a third quadrant of the combined constellation x is obtained according to the following formula:

$$x_1 = \sqrt{7/55}\left((I-2\sqrt{6/7}) + j(Q\text{-}2\sqrt{6/7})\right)$$

Secondly, the combined constellation x is obtained by $x_1$:

$$x = sign1\left(real(x_1)\right) + sign2\left(imag(x_1)\right)$$

where real() denotes an operation for obtaining the real part, imag() denotes an operation for obtaining the imaginary part, sign1 and sign2 are:

$$si\,gn1 = e^{j\varphi_0\pi}$$

$$si\,gn2 = e^{j(\varphi_1+1/2)\pi}$$

$\varphi_0$, $\varphi_1$, $b_0(i)$, $b_0(i+1)$ and a first modulation symbol $s_1$ meet the following correspondence relationship:

| $b_0(i)$, $b_0(i+1)$ | (sing(real($s_1$)), sign(imag($s_1$))) | $\varphi_0$ | $\varphi_1$ |
|---|---|---|---|
| 00 | (1,1) | 1 | 1 |

(continued)

| bo(i), $b_0$(i+1) | (sing(real($s_1$), sign(imag($s_1$))) | $\varphi_0$ | $\varphi_1$ |
|---|---|---|---|
| 01 | (1,-1) | 1 | 0 |
| 10 | (-1,1) | 0 | 1 |
| 11 | (-1,-1) | 0 | 0 |

Example forty

In this example, assuming that n=5 and a modulation scheme of the second modulation bit sequence is 64QAM, the first modulation bit sequence bo(i), $b_0$(i+1) and the second modulation bit sequence bi(i), $b_1$(i+1), $b_1$(i+2), $b_1$(i+3),$b_1$(i+4), $b_1$(i+5), that is, 8 bits in total, are jointly modulated and mapped to obtain a combined constellation x, where i is a natural number.

The second generation manner is adopted to generate the constellation point of the combined constellation x.

When the first transmission power radio is 128/170, $c_2$ is $-\sqrt{21/85}$ and $d_2$ is $-4\sqrt{2/21}$, as shown in the following table:

| First transmission power radio | $c_2$ | $d_2$ |
|---|---|---|
| 128/170 | $-\sqrt{21/85}$ | $-4\sqrt{2/21}$ |

The modulation mapping relationship of the first bit sequence bo(i), $b_0$(i+1) is as shown in the following table:

| bo(i), $b_0$(i+1) | I | Q |
|---|---|---|
| 00 | $1/\sqrt{2}$ | $1/\sqrt{2}$ |
| 01 | $1/\sqrt{2}$ | $-1/\sqrt{2}$ |
| 10 | $-1/\sqrt{2}$ | $1/\sqrt{2}$ |
| 11 | $-1/\sqrt{2}$ | $-1/\sqrt{2}$ |

Firstly, a constellation point $x_2$ in a first quadrant of the combined constellation x is obtained by the following formula:

$$x_2 = -\sqrt{21/85}\left((I - 4\sqrt{2/21}) + j(Q\text{-}4\sqrt{2/21})\right)$$

Secondly, the combined constellation x is obtained by $x_2$:

$$x = sign1\times\left(real(x_2)\right) + sign2\times\left(imag(x_2)\right)$$

where real() denotes an operation for obtaining the real part, imag() denotes an operation for obtaining the imaginary part, sign1 and sign2 are obtained by the following formulas:

$$sign1 = (-1)^{b_0(i)}$$

$$sign2 = j \times (-1)^{b_0(i+1)}$$

Alternatively, sign1 and sign2 are obtained according to the following formulas:

$$sign1 = sign(real(s_1))$$

$$sign2 = j \times sign(imag(s_1))$$

where $s_1$ is the constellation point of the first modulation bit sequence bo(i), $b_0(i+1)$, sign() denotes a sign function.

Example forty-one

In this example, assuming that n=5 and a modulation scheme of the second modulation bit sequence is 64QAM, the first modulation bit sequence bo(i), $b_0(i+1)$ and the second modulation bit sequence bi(i), $b_1(i+1)$, $b_1(i+2)$, $b_1(i+3)$, $b_1(i+4)$, $b_1(i+5)$, that is, 8 bits in total, are jointly modulated and mapped to obtain a combined constellation x, where i is a natural number.

The second generation manner is adopted to generate the constellation point of the combined constellation x.

When the second transmission power radio is 40.5/51, $c_2$ is $-\sqrt{7/34}$ and $d_2$ is $-3\sqrt{3/14}$ ,as shown in the following table:

| Second transmission power radio | $c_2$ | $d_2$ |
|---|---|---|
| 40.5/51 | $-\sqrt{7/34}$ | $-3\sqrt{3/14}$ |

The modulation mapping relationship of the first bit sequence bo(i), $b_0(i+1)$ is as shown in the following table:

| bo(i), $b_0(i+1)$ | I | Q |
|---|---|---|
| 00 | $1/\sqrt{2}$ | $1/\sqrt{2}$ |
| 01 | $1/\sqrt{2}$ | $-1/\sqrt{2}$ |
| 10 | $-1/\sqrt{2}$ | $1/\sqrt{2}$ |
| 11 | $-1/\sqrt{2}$ | $-1/\sqrt{2}$ |

Firstly, a constellation point $x_1$ in a first quadrant of the combined constellation x is obtained by the following formula:

$$x_2 = -\sqrt{7/34}\left((I - 3\sqrt{3/14}) + j(Q - 3\sqrt{3/14})\right)$$

Secondly, the combined constellation x is obtained by $x_2$:

$$x = sign1 \times (real(x_2)) + sign2 \times (imag(x_2))$$

where real() denotes an operation for obtaining the real part, imag() denotes an operation for obtaining the imaginary part, sign1 and sign2 are obtained by the following formulas:

$$sign1 = (-1)^{b_0(i)}$$

$$sign2 = j \times (-1)^{b_0(i+1)}$$

Alternatively, sign1 and sign2 are obtained according to the following formulas:

$$sign1 = sign(real(s_1))$$

$$sign2 = j \times sign(imag(s_1))$$

where $s_1$ is the constellation point of the first modulation bit sequence bo(i), $b_0$(i+1), sign() denotes a sign function.

Example forty-two

In this example, assuming that n=5 and a modulation scheme of the second modulation bit sequence is 64QAM, the first modulation bit sequence bo(i), $b_0$(i+1) and the second modulation bit sequence bi(i), $b_1$(i+1), $b_1$(i+2), $b_1$(i+3),$b_1$(i+4), $b_1$(i+5), that is, 8 bits in total, are jointly modulated and mapped to obtain a combined constellation x, where i is a natural number.

The second generation manner is adopted to generate the constellation point of the combined constellation x.

when the third transmission power radio is 288/330, $c_2$ is $-\sqrt{7/55}$ and $d_2$ is $-2\sqrt{6/7}$, as shown in the following table:

| Third transmission power radio | $c_2$ | $d_2$ |
|---|---|---|
| 288/330 | $-\sqrt{7/55}$ | $-2\sqrt{6/7}$ |

The modulation mapping relationship of the first bit sequence bo(i), $b_0$(i+1) is as shown in the following table:

| bo(i), $b_0$(i+1) | I | Q |
|---|---|---|
| 00 | $1/\sqrt{2}$ | $1/\sqrt{2}$ |
| 01 | $1/\sqrt{2}$ | $-1/\sqrt{2}$ |
| 10 | $-1/\sqrt{2}$ | $1/\sqrt{2}$ |
| 11 | $-1/\sqrt{2}$ | $-1/\sqrt{2}$ |

Firstly, a constellation point $x_2$ in a first quadrant of the combined constellation x is obtained by the following formula:

$$x_2 = -\sqrt{7/55}\left((I - 2\sqrt{6/7}) + j(Q-2\sqrt{6/7})\right)$$

Secondly, the combined constellation x is obtained by $x_2$:

$$x = sign1 \times \left(real(x_2)\right) + sign2 \times \left(imag(x_2)\right)$$

where real() denotes an operation for obtaining the real part, imag() denotes an operation for obtaining the imaginary part, sign1 and sign2 are obtained by the following formulas:

$$sign1 = (-1)^{b_0(i)}$$

$$sign2 = j \times (-1)^{b_0(i+1)}$$

Alternatively, sign1 and sign2 are obtained according to the following formulas:

$$sign1 = sign(real(s_1))$$

$$sign2 = j \times sign(imag(s_1))$$

where $s_1$ is the constellation point of the first modulation bit sequence bo(i), $b_0$(i+1), sign() denotes a sign function.

Example forty-three

In this example, assuming that n=5 and a modulation scheme of the second modulation bit sequence is 64QAM, the first modulation bit sequence bo(i), $b_0$(i+1) and the second modulation bit sequence bi(i), $b_1$(i+1), $b_1$(i+2), $b_1$(i+3),$b_1$(i+4), $b_1$(i+5), that is, 8 bits in total, are jointly modulated and mapped to obtain a combined constellation x, where i is a natural number.

The second generation manner is adopted to generate the constellation point of the combined constellation x.

When the first transmission power radio is 128/170, $c_2$ is $-\sqrt{21/85}$ and $d_2$ is $-4\sqrt{2/21}$, as shown in the following table:

| First transmission power radio | $c_2$ | $d_2$ |
|---|---|---|
| 128/170 | $-\sqrt{21/85}$ | $-4\sqrt{2/21}$ |

The modulation mapping relationship of the first bit sequence bo(i), $b_0$(i+1) is as shown in the following table:

| bo(i), $b_0$(i+1) | I | Q |
|---|---|---|
| 00 | $1/\sqrt{2}$ | $1/\sqrt{2}$ |
| 01 | $1/\sqrt{2}$ | $-1/\sqrt{2}$ |
| 10 | $-1/\sqrt{2}$ | $1/\sqrt{2}$ |
| 11 | $-1/\sqrt{2}$ | $-1/\sqrt{2}$ |

Firstly, a constellation point $x_2$ in a first quadrant of the combined constellation x is obtained by the following formula:

$$x_2 = -\sqrt{21/85}\left((I - 4\sqrt{2/21}) + j(Q - 4\sqrt{2/21})\right)$$

Secondly, the combined constellation x is obtained by $x_2$:

$$x = sign1 \times \left(real(x_2)\right) + sign2 \times \left(imag(x_2)\right)$$

where real() denotes an operation for obtaining the real part, imag() denotes an operation for obtaining the imaginary part, sign1 and sig2 are:

$$si\,gn1 = e^{j\varphi_0\pi}$$

$$si\,gn2 = e^{j(\varphi_1+1/2)\pi}$$

$\varphi_0$, $\varphi_1$ may be obtained by the first modulation bit sequence bo(i), $b_0(i+1)$:

$$\varphi_0 = b_0(i)$$

$$\varphi_1 = b_0(i+1)$$

Alternatively, $\varphi_0$, $\varphi_1$ may be obtained by a QPSK symbol mapped by the first modulation bit sequence bo(i), $b_0(i+1)$:

$$\varphi_0 = (1 - sign(real(s_1)))/2$$

$$\varphi_1 = (1 - sign(imag(s_1)))/2$$

where $s_1$ is the constellation point of the first modulation bit sequence bo(i), $b_0(i+1)$, sign() denotes a sign function.

Example forty-four

In this example, assuming that n=5 and a modulation scheme of the second modulation bit sequence is 64QAM, the first modulation bit sequence bo(i), $b_0(i+1)$ and the second modulation bit sequence bi(i), $b_1(i+1)$, $b_1(i+2)$, $b_1(i+3)$, $b_1(i+4)$, $b_1(i+5)$, that is, 8 bits in total, are jointly modulated and mapped to obtain a combined constellation x, where i is a natural number.
The second generation manner is adopted to generate the constellation point of the combined constellation x.

When the second transmission power radio is 40.5/51, $c_2$ is $-\sqrt{7/34}$ and $d_2$ is $-3\sqrt{3/14}$, as shown in the following table:

| Second transmission power radio | $c_2$ | $d_2$ |
|---|---|---|
| 40.5/51 | $-\sqrt{7/34}$ | $-3\sqrt{3/14}$ |

The modulation mapping relationship of the first bit sequence bo(i), $b_0(i+1)$ is as shown in the following table:

| bo(i), $b_0$(i+1) | I | Q |
|---|---|---|
| 00 | $1/\sqrt{2}$ | $1/\sqrt{2}$ |
| 01 | $1/\sqrt{2}$ | $-1/\sqrt{2}$ |
| 10 | $-1/\sqrt{2}$ | $1/\sqrt{2}$ |
| 11 | $-1/\sqrt{2}$ | $-1/\sqrt{2}$ |

Firstly, a constellation point $x_2$ in a first quadrant of the combined constellation x is obtained by the following formula:

$$x_2 = -\sqrt{7/34}\left((I - 3\sqrt{3/14}) + j(Q - 3\sqrt{3/14})\right)$$

Secondly, the combined constellation x is obtained by $x_2$:

$$x = sign1 \times \left(real(x_2)\right) + sign2 \times \left(imag(x_2)\right)$$

where real() denotes an operation for obtaining the real part, imag() denotes an operation for obtaining the imaginary part, sign1 and sign 2 are:

$$si\,gn1 = e^{j\varphi_0 \pi}$$

$$si\,gn2 = e^{j(\varphi_1 + 1/2)\pi}$$

$\varphi0$, $\varphi1$ may be obtained by the first modulation bit sequence bo (i), $b_0$(i+1):

$$\varphi_0 = b_0(i)$$

$$\varphi_1 = b_0(i+1)$$

Alternatively, $\varphi0$, $\varphi1$ may be obtained by a QPSK symbol mapped by the first modulation bit sequence bo(i), $b_0$(i+1):

$$\varphi_0 = (1 - sign(real(s_1)))/2$$

$$\varphi_1 = (1 - sign(imag(s_1)))/2$$

where sign() denotes a sign function.

Example forty-five

In this example, assuming that n=5 and a modulation scheme of the second modulation bit sequence is 64QAM, the first modulation bit sequence $b_0$ (i), $b_0$(i+1) and the second modulation bit sequence bi(i), $b_1$(i+1), $b_1$(i+2), $b_1$(i+3),$b_1$(i+4), $b_1$(i+5), that is, 8 bits in total, are jointly modulated and mapped to obtain a combined constellation x, where i is a natural number.

The second generation manner is adopted to generate the constellation point of the combined constellation x.

When the third transmission power radio is 288/330, $c_2$ is $-\sqrt{7/55}$ and $d_2$ is $-2\sqrt{6/7}$, as shown in the following table:

| Third transmission power radio | $c_2$ | $d_2$ |
| --- | --- | --- |
| 288/330 | $-\sqrt{7/55}$ | $-2\sqrt{6/7}$ |

The modulation mapping relationship of the first bit sequence $bo(i)$, $b_0(i+1)$ is as shown in the following table:

| $bo(i)$, $b_0(i+1)$ | I | Q |
| --- | --- | --- |
| 00 | $1/\sqrt{2}$ | $1/\sqrt{2}$ |
| 01 | $1/\sqrt{2}$ | $-1/\sqrt{2}$ |
| 10 | $-1/\sqrt{2}$ | $1/\sqrt{2}$ |
| 11 | $-1/\sqrt{2}$ | $-1/\sqrt{2}$ |

Firstly, a constellation point $x_2$ in a first quadrant of the combined constellation x is obtained by the following formula:

$$ x_2 = -\sqrt{7/55}\left((I - 2\sqrt{6/7}) + j(Q - 2\sqrt{6/7})\right) $$

Secondly, the combined constellation x is obtained by $x_2$:

$$ x = sign1 \times \left(real(x_2)\right) + sign2 \times \left(imag(x_2)\right) $$

where real() denotes an operation for obtaining the real part, imag() denotes an operation for obtaining the imaginary part, sign1 and sign2 are:

$$ sign1 = e^{j\varphi_0\pi} $$

$$ sign2 = e^{j(\varphi_1+1/2)\pi} $$

$\varphi_0$, $\varphi_1$ may be obtained by the first modulation bit sequence $bo(i)$, $b_0(i+1)$:

$$ \varphi_0 = b_0(i) $$

$$ \varphi_1 = b_0(i+1) $$

Alternatively, $\varphi_0$, $\varphi_1$ may be obtained by a QPSK symbol mapped by the first modulation bit sequence $bo(i)$, $b_0(i+1)$:

$$\varphi_0 = (1 - sign(real(s_1)))/2$$

$$\varphi_1 = (1 - sign(imag(s_1)))/2$$

where $s_1$ is the constellation point of the first modulation bit sequence bo(i), $b_0$(i+1), sign() denotes a sign function.

Solutions of the embodiments of the present disclosure adopts a generation formula of a jointly modulated symbol, and a combined constellation may be generated for different transmission power ratios, and the generation formula is able to represent a traditional constellation, which is intuitive and facilitate for standardizing.

FIG. 5 is a structural diagram of a device for generating a jointly modulated symbol according to an embodiment of the present disclosure. As shown in FIG. 5, the device for generating the jointly modulated symbol according to the embodiment of the present disclosure includes a modulation unit 50 and a constellation point generation unit 51.

The modulation unit 50 is configured to jointly modulate and map, a first modulation bit sequence bo(i), $b_0$(i+1) and a second modulation bit sequence bi(i), $b_1$(i+1),...$b_1$(i+n), which are m bits in total, to obtain a combined constellation x, where i is a natural number, $n \in \{1,3,5\}$, $m \in \{4,6,8\}$.

The constellation point generation unit 51 is configured to generate a constellation point of the combined constellation x in any one of manners described below.

In manner one, a constellation point $x_1$ in a third quadrant of the combined constellation x is obtained:

$$x_1 = c((I-d)+j(Q-d));$$

Then, the combined constellation x is obtained based on $x_1$:

$$x = sign1 \times (real(x_1)) + sign2 \times (imag(x_1))$$

In manner two, a constellation point $x_2$ in a first quadrant of the combined constellation x is obtained:

$$x_2 = c_2((I+d_2)+j(Q+d_2))$$

Then, the combined constellation x is obtained based on $x_2$:

$$x = sign1 \times (real(x_2)) + sign2 \times (imag(x_2))$$

I and Q are coordinates of a constellation point $S_2$ of the second modulation bit sequence bi(i), $b_1$(i+1),...$b_1$(i+n), $S_2 = I + jQ$, $c_2$ and $d_2$ are parameters related to power allocation of the first modulation bit sequence and the second modulation bit sequence in the combined constellation; real() denotes an operation for obtaining the real part, imag()denotes an operation for obtaining the imaginary part. Sign1 and sign2 are obtained by the first modulation bit sequence bo(i), $b_0$(i+1) or obtained by a quadrature phase shift keying (QPSK) symbol mapped by the first modulation bit sequence bo(i), $b_0$(i+1).

A bit sequence transmitted by a NOMA system to a remote user is expressed as bo(i), $b_0$(i+1), a modulation scheme is a QPSK modulation, and the bit sequence transmitted by the NOMA system to the near-end user is expressed as bi(i), $b_1$(i+1), ••• $b_1$(i+n). A first modulation bit sequence bo(i), $b_0$(i+1) and a second modulation bit sequence bi (i), $b_1$(i+1), •••$b_1$(i+n), which are m bits in total, are jointly modulated and mapped to obtain a combined constellation x, where i is a natural number, $n \in \{1,3,5\}$, $m \in \{4,6,8\}$.

A constellation point of the combined constellation x is generated in any one of manners described below.

In a first generating manner, firstly, a constellation point $x_1$ in a third quadrant of the combined constellation x is obtained by the following formula:

$$x_1 = c((I-d)+j(Q\text{-}d))$$

where I and Q are coordinates of the constellation point $S_2$ of the second modulation bit sequence bi(i), $b_1$(i+1),...$b_1$(i+n), $S_2 = I + jQ$, c and d are parameters related to power allocation of the first modulation bit sequence and the second modulation bit sequence in the combined constellation.

Secondly, the combined constellation x is obtained by $x_1$:

$$x = sign1\big(real(x_1)\big) + sign2\big(imag(x_1)\big)$$

where real() denotes an operation for obtaining the real part, imag() denotes an operation for obtaining the imaginary part. Sign1 and sign2 are obtained by the first modulation bit sequence $bo(i)$, $b_0(i+1)$ or obtained by the quadrature phase shift keying (QPSK) symbol mapped by the first modulation bit sequence $bo(i)$, $b_0(i+1)$.

When the first modulation bit sequence $bo(i)$, $b_0(i+1)$ is 00, then sign1=-1 and sign2=-j; when the first modulation bit sequence $bo(i)$, $b_0(i+1)$ is 10, then sign1=1 and sign2=-j; when the first modulation bit sequence $bo(i)$, $b_0(i+1)$ is 01, then sign1=-1 and sign2=j; and when the first modulation bit sequence $bo(i)$, $b_0(i+1)$ is 11, then sign1=1 and sign2=j, that is, sign1, sign2, $bo(i)$, $b_0(i+1)$ meet the following relationship:

$$sign1 = (-1)^{(1-b_0(i))}$$

$$sign2 = j \times (-1)^{(1-b_0(i+1))}$$

Assuming that modulation scheme of the first modulation bit sequence is QPSK, when $s_1 = \dfrac{\sqrt{2}}{2} + j\dfrac{\sqrt{2}}{2}$, sign1=-1 and sign2=-j; when $s_1 = -\dfrac{\sqrt{2}}{2} + j\dfrac{\sqrt{2}}{2}$, sign1=1 and sign2=-j; when $s_1 = -\dfrac{\sqrt{2}}{2} - j\dfrac{\sqrt{2}}{2}$, sign1=1 and sign2=j; and when $s_1 = \dfrac{\sqrt{2}}{2} - j\dfrac{\sqrt{2}}{2}$, sign1=-1, sign2=j. sign1 and sign2 meet the following formulas:

$$sign1 = sign3(sign(real(s_1)))$$

$$sign2 = j \times sign3(sign(imag(s_1)))$$

where sign() denotes a sign function, sign3() denotes an inverse function of the sign function.

In a second generating manner, firstly, a constellation point $x_2$ in a first quadrant of the combined constellation x is obtained according to the following formula:

$$x_2 = c_2((I + d_2) + j(Q + d_2))$$

where I and Q are coordinates of the constellation point $S_2$ of the second modulation bit sequence $bi(i)$, $b_1(i+1),...b_1(i+n)$, $S_2=I+jQ$, $c_2$ and $d_2$ are parameters related to power allocation of the first modulation bit sequence and the second modulation bit sequence in the combined constellation.

Secondly, the combined constellation x is obtained through $x_2$ according to the following formula:

$$x = sign1 \times \big(real(x_2)\big) + sign2 \times \big(imag(x_2)\big)$$

where real() denotes an operation for obtaining the real part, imag() denotes an operation for obtaining the imaginary part. sign1 and sign2 are obtained by the first modulation bit sequence $b_0(i)$, $b_0(i+1)$ or obtained by the quadrature phase shift keying (QPSK) symbol mapped by the first modulation bit sequence $b_0(i)$, $b_0(i+1)$.

When the first modulation bit sequence $b_0(i)$, $b_0(i+1)$ is 00, sign1=1 and sign2=j; when the first modulation bit sequence $b_0(i)$, $b_0(i+1)$ is 10, sign1=-1 and sign2=j; when the first modulation bit sequence $b_0(i)$, $b_0(i+1)$ is 01, sign1=1 and sign2=-j; and when the first modulation bit sequence $b_0(i)$, $b_0(i+1)$ is 11, sign1=-1 and sign2=-j. sign1 and sign2 meet the following formulas:

$$sign1 = (-1)^{b_0(i)}$$

$$sign2 = j \times (-1)^{b_0(i+1)}$$

Assuming that modulation scheme of the first modulation bit sequence is QPSK, when $s_1 = \frac{\sqrt{2}}{2} + j\frac{\sqrt{2}}{2}$, sign1=1 and sign2=j; when $s_1 = \frac{-\sqrt{2}}{2} + j\frac{\sqrt{2}}{2}$, sign1=-1 and sign2=j; when $s_1 = -\frac{\sqrt{2}}{2} - j\frac{\sqrt{2}}{2}$, sign1=-1, sign2=-j; and when $s_1 = \frac{\sqrt{2}}{2} - j\frac{\sqrt{2}}{2}$, sign1=1, sign2=-j. sign1 and sign2 meet the following formulas:

$$sign1 = sign(real(s_1))$$

$$sign2 = j \times sign(imag(s_1))$$

where sign() denotes a sign function.

In the above method, in the first manner, the zoom factor c and the shift amount d are related to transmission power. When n=1 and a first transmission power radio is 8/10, then c is $\sqrt{1/5}$ and d is $\sqrt{2}$, as shown in the following table:

| First transmission power radio | c | d |
|---|---|---|
| 8/10 | $\sqrt{1/5}$ | $\sqrt{2}$ |

When n=1 and a second transmission power radio is 50/58, then c is $2/\sqrt{29}$ and d is $5/(2\sqrt{2})$, as shown in the following table:

| Second transmission power radio | c | d |
|---|---|---|
| 50/58 | $2/\sqrt{29}$ | $5/(2\sqrt{2})$ |

When n=1 and a third transmission power radio is 264.5/289, then c is $7\sqrt{1/578}$ and d is $23/(7\sqrt{2})$, as shown in the following table:

| Third transmission power radio | c | d |
|---|---|---|
| 264.5/289 | $7\sqrt{1/578}$ | $23/(7\sqrt{2})$ |

When n=3 and the first transmission power radio is 32/42, then c is $\sqrt{5/21}$ and d is $2\sqrt{2/5}$, as shown in the following table:

| First transmission power radio | c | d |
|---|---|---|
| 32/42 | $\sqrt{5/21}$ | $2\sqrt{2/5}$ |

When n=3 and the second transmission power radio is 144.5/167, then c is $3\sqrt{5/334}$ and d is $17/(3\sqrt{10})$, as shown in the following table:

| Second transmission power radio | c | d |
|---|---|---|
| 144.5/167 | $3\sqrt{5/334}$ | $17/(3\sqrt{10})$ , |

When n=3 and the third transmission power radio is 128/138, c is $\sqrt{5/69}$ and d is $4\sqrt{2/5}$, as shown in the following table:

| Third transmission power radio | c | d |
|---|---|---|
| 128/138 | $\sqrt{5/69}$ | $4\sqrt{2/5}$ |

When n=5 and the first transmission power radio is 128/170, c is $\sqrt{21/85}$ and d is $4\sqrt{2/21}$, as shown in the following table:

| First transmission power radio | c | d |
|---|---|---|
| 128/170 | $\sqrt{21/85}$ | $4\sqrt{2/21}$ |

When n=5 and the second transmission power radio is 40.5/51, then c is $\sqrt{7/34}$ and d is $3\sqrt{3/14}$, as shown in the following table:

| Second transmission power radio | c | d |
|---|---|---|
| 40.5/51 | $\sqrt{7/34}$ | $3\sqrt{3/14}$ |

When n=5 and the third transmission power radio is 288/330, then c is $\sqrt{7/55}$ and d is $2\sqrt{6/7}$, as shown in the following table:

| Third transmission power radio | c | d |
|---|---|---|
| 288/330 | $\sqrt{7/55}$ | $2\sqrt{6/7}$ |

In the above method, in the second manner, $c_2$ and $d_2$ are related to transmission power, when n=1 and the first transmission power radio is 8/10, then $c_2$ is $-\sqrt{1/5}$ and $d_2$ is $-\sqrt{2}$, as shown in the following table:

| First transmission power | $c_2$ | $d_2$ |
|---|---|---|
| 8/10 | $-\sqrt{1/5}$ | $-\sqrt{2}$ |

When n=1 and the second transmission power radio is 50/58, then $c_2$ is $-2/\sqrt{29}$, and $d_2$ is $-5/(2\sqrt{2})$, as shown in the following table:

| Second transmission power radio | $c_2$ | $d_2$ |
|---|---|---|
| 50/58 | $-2/\sqrt{29}$ | $-5/(2\sqrt{2})$ |

When n=1 and the third transmission power radio is 264.5/289, then $c_2$ is $-7/\sqrt{1/578}$ and $d_2$ is $-23/(7\sqrt{2})$, as shown in the following table:

| Third transmission power radio | $c_2$ | $d_2$ |
|---|---|---|
| 264.5/289 | $-7/\sqrt{1/578}$ | $-23/(7\sqrt{2})$ |

When n=3 and the first transmission power radio is 32/42, then $c_2$ is $-\sqrt{5/21}$ and $d_2$ is $-2\sqrt{2/5}$, as shown in the following table:

| First transmission power radio | $c_2$ | $d_2$ |
|---|---|---|
| 32/42 | $-\sqrt{5/21}$ | $-2\sqrt{2/5}$ |

When n=3 and the second transmission power radio is 144.5/167, then $c_2$ is $-3\sqrt{5/334}$ and $d_2$ is $-17/(3\sqrt{10})$, as shown in the following table:

| Second transmission power radio | $c_2$ | $d_2$ |
|---|---|---|
| 144.5/167 | $-3\sqrt{5/334}$ | $-17/(3\sqrt{10})$ |

When n=3 and the third transmission power radio is 128/138, $c_2$ is $-\sqrt{5/69}$ and $d_2$ is $-4\sqrt{2/5}$, as shown in the following table:

| Third transmission power radio | $c_2$ | $d_2$ |
|---|---|---|
| 128/138 | $-\sqrt{5/69}$ | $-4\sqrt{2/5}$ |

When n=5 and the first transmission power radio is 128/170, then $c_2$ is $-\sqrt{21/85}$ and $d_2$ is $-4\sqrt{2/21}$, as shown in the following table:

| First transmission power radio | $c_2$ | $d_2$ |
|---|---|---|
| 128/170 | $-\sqrt{21/85}$ | $-4\sqrt{2/21}$ |

When n=5 and the second transmission power radio is 40.5/51, $c_2$ is $-\sqrt{7/34}$ and $d_2$ is $-3\sqrt{3/14}$, as shown in the following table:

| Second transmission power radio | $c_2$ | $d_2$ |
|---|---|---|
| 40.5/51 | $-\sqrt{7/34}$ | $-3\sqrt{3/14}$ |

When n=5 and the third transmission power radio is 288/330, then $c_2$ is $-\sqrt{7/55}$ and $d_2$ is $-2\sqrt{6/7}$, as shown in the following table:

| Third transmission power radio | $c_2$ | $d_2$ |
|---|---|---|
| 288/330 | $-\sqrt{7/55}$ | $-2\sqrt{6/7}$ |

It should be understood by those skilled in the art that the implementation functions of various units in the device for generating the jointly modulated symbol shown in FIG. 5 can be understood by referring to the relevant description of the foregoing method for generating the jointly modulated symbol. In FIG. 5, the modulation unit 50 shown may be implemented by a modulator, the constellation point generation unit 51 may be implemented by a microprocessor, an FPGA, a digital signal processor, and the like.

The embodiment of the present disclosure further provides a transmitter, including: a modulator. The modulator is configured to modulate data to be transmitted according to the above method for generating a jointly modulated symbol.

A computer-readable storage medium further provided by an embodiment of the present disclosure is configured to store computer-executable instructions for executing the above-mentioned methods when executed by a processor.

It should be understood by those skilled in the art that functional modules/units in all or part of the steps of the method, the system and the device disclosed above may be implemented as software, firmware, hardware and appropriate combinations thereof. In the hardware implementation, division of the functional modules/units mentioned in the above description may not correspond to division of physical components. For example, one physical component may have several functions, or one function or step may be executed jointly by several physical components. Some or all components may be implemented as software executed by processors such as digital signal processors or microcontrollers, hardware, or integrated circuits such as application specific integrated circuits. Such software may be distributed on a computer-readable medium, which may include a computer storage medium (or a non-transitory medium) and a communication medium (or a transitory medium). As is known to those skilled in the art, the term, computer storage medium, includes volatile and nonvolatile, removable and non-removable media implemented in any method or technology for storing information (such as computer-readable instructions, data structures, program modules or other data). The computer storage medium includes, but is not limited to, a random access memory (RAM), a read-only memory (ROM), an electrically erasable programmable read-only memory (EEPROM), a flash memory or other memory technologies, a compact disc read-only memory (CD-ROM), a digital versatile disc (DVD) or other optical disc storage, a magnetic cassette, a magnetic tape, a magnetic disk storage or other magnetic storage devices, or any other medium used for storing desired information and accessed by a computer. In addition, as is known to those skilled in the art, the communication medium generally includes computer-readable instructions, data structures, program modules or other data in modulated data signals such as carriers or other transmission mechanisms, and may include any information delivery medium.

**Claims**

1.  A method for generating a jointly modulated symbol, performed by a device, comprising:

jointly modulating and mapping a first modulation bit sequence $b_0(i)$, $b_0(i+1)$ and a second modulation bit sequence $b_1(i)$, $b_1(i+1)$,...$b_1(i+n)$, which are m bits in total, to obtain a combined constellation x, wherein i is a natural number, $n \in \{1,3,5\}$, $m \in \{4,6,8\}$;

wherein the combined constellation x is obtained according to the following formula:

$$x = sign1 \times c(I-d) + sign2 \times c(Q-d);$$

wherein c and d are parameters related to power allocation of the first modulation bit sequence and the second modulation bit sequence in the combined constellation x; I and Q are coordinates of a constellation point of the second modulation bit sequence $b_1(i)$, $b_1(i+1)$,...$b_1(i+n)$; and

wherein sign1 and sign2 are obtained by the first modulation bit sequence $b0(i)$, $b0(i+1)$, when the first modulation bit sequence $b_0(i)$, $b_0(i+1)$ is 00, sign1=-1 and sign2=-j; when the first modulation bit sequence $b_0(i)$, $b_0(i+1)$ is 10, sign1=1 and sign2=-j; when the first modulation bit sequence $b_0(i)$, $b_0(i+1)$ is 01, sign1=-1 and sign2=j; and when the first modulation bit sequence $b_0(i)$, $b_0(i+1)$ is 11, sign1=1 and sign2=j;

$$sign1 = (-1)^{(1-b_0(i))}$$

$$sign2 = j \times (-1)^{(1-b_0(i+1))};$$

or, sign1 and sign2 are obtained by a quadrature phase shift keying, QPSK, symbol mapped by the first modulation bit sequence $b0(i)$, $b0(i+1)$, wherein modulation of the first modulation bit sequence is QPSK, when a constellation point of the first modulation bit sequence $b_0(i)$, $b_0(i+1)$ is $s_1 = \frac{\sqrt{2}}{2} + j\frac{\sqrt{2}}{2}$, sign1=-1, sign2=-j; when the constellation point of the first modulation bit sequence $b_0(i)$, $b_0(i+1)$ is $s_1 = -\frac{\sqrt{2}}{2} + j\frac{\sqrt{2}}{2}$, sign1=1, sign2=-j; when the constellation point of the first modulation bit sequence $b_0(i)$, $b_0(i+1)$ is $s_1 = -\frac{\sqrt{2}}{2} - j\frac{\sqrt{2}}{2}$, sign1=1, sign2=j; and when the constellation point of the first modulation bit sequence $b_0(i)$, $b_0(i+1)$ is $s_1 = \frac{\sqrt{2}}{2} - j\frac{\sqrt{2}}{2}$, sign1=-1, sign2=j;

$$sign1 = sign3(sign(real(s_1)))$$

$$sign2 = j \times sign3(sign(imag(s_1))),$$

wherein sign() denotes a sign function, sign3() denotes an inverse function of the sign function.

2. The method of claim 1, wherein when sign1=1 and sign2=j, a constellation point $x_1$ in a third quadrant of the combined constellation x is calculated according to the following formula: xi= c((I-d)+j(Q-d)).

3. The method of claim 1, wherein when modulation of the first modulation bit sequence is QPSK, and sign1 = $e^{j\varphi_0\pi}$ and sign2 = $e^{j(\varphi_1+1/2)\pi}$ $\varphi_0$ $\varphi_1$ and $b_0(i)$, $b_0(i+1)$ meet the following formulas:

$$\varphi_0 = 1 - b_0(i)$$

$$\varphi_1 = 1 - b_0(i+1).$$

4.

The method of claim 1, wherein when n=1 and a transmission power ratio is 8/10, c is $\sqrt{1/5}$ and d is $\sqrt{2}$ ; when n=1 and the transmission power ratio is 50/58, c is $2/\sqrt{29}$ and d is $5/2\sqrt{2}$ ; when n=1 and the transmission power ratio is 264.5/289, c is $7\sqrt{1/578}$ and d is $23/(7\sqrt{2})$ .

5. The method of claim 1, wherein when n=3 and a transmission power ratio is 32/42, c is $\sqrt{5/21}$ and d is $2\sqrt{2/5}$ ; when n=3 and the transmission power ratio is 144.5/167, c is $3\sqrt{5/334}$ and d is $17/(3\sqrt{10})$ ; when n=3 and the transmission power ratio is 128/138, c is $\sqrt{5/69}$ and d is $4\sqrt{2/5}$ .

6. The method of claim 1, wherein when n=5 and a transmission power ratio is 128/170, c is $\sqrt{21/85}$ and d is $4\sqrt{2/21}$ ; when n=5 and the transmission power ratio is 40.5/51, c is $\sqrt{7/34}$ and d is $3\sqrt{3/14}$ ; when n=5 and the transmission power ratio is 288/330, c is $\sqrt{7/55}$ and d is $2\sqrt{6/7}$ .

7. A device for generating a jointly modulated symbol, comprising:

a modulation unit (50), configured to jointly modulate and map, a first modulation bit sequence $b_0(i)$, $b_0(i+1)$ and a second modulation bit sequence $b_1(i)$, $b_1(i+1)$,...$b_1(i+n)$, which are m bits in total, to obtain a combined constellation x, wherein i is a natural number, $n \in \{1,3,5\}$, $m \in \{4,6,8\}$;
a constellation point generation unit (51), configured to synthesize constellation x, wherein

$$x = sign1 \times c(I-d) + sign2 \times c(Q-d);$$

wherein c and d are parameters related to power allocation of the first modulation bit sequence and the second modulation bit sequence in the combined constellation x; I and Q are coordinates of a constellation point of the second modulation bit sequence $b_1(i)$, $b_1(i+1)$,...$b_1(i+n)$; and
wherein sign1 and sign2 are obtained by the first modulation bit sequence b0(i), b0(i+1), when the first modulation bit sequence $b_0(i)$, $b_0(i+1)$ is 00, sign1=-1 and sign2=-j; when the first modulation bit sequence $b_0(i)$, $b_0(i+1)$ is 10, sign1=1 and sign2=-j; when the first modulation bit sequence $b_0(i)$, $b_0(i+1)$ is 01, sign1=-1 and sign2=j; and when the first modulation bit sequence $b_0(i)$, $b_0(i+1)$ is 11, sign1=1 and sign2=j;

$$sign1 = (-1)^{(1-b_0(i))}$$

$$sign2 = j \times (-1)^{(1-b_0(i+1))};$$

or, sign1 and sign2 are obtained by a quadrature phase shift keying, QPSK, symbol mapped by the first modulation bit sequence b0(i), b0(i+1), wherein modulation of the first modulation bit sequence is QPSK, when a constellation point of the first modulation bit sequence $b_0(i)$, $b_0(i+1)$ is $s_1 = \frac{\sqrt{2}}{2} + j\frac{\sqrt{2}}{2}$ , sign1=-1, sign2=-j; when the constellation point of the first modulation bit sequence $b_0(i)$, $b_0(i+1)$ is $s_1 = -\frac{\sqrt{2}}{2} + j\frac{\sqrt{2}}{2}$ , sign1=1, sign2=-j; when the constellation point of the first modulation bit sequence $b_0(i)$, $b_0(i+1)$ is $s_1 = -\frac{\sqrt{2}}{2} - j\frac{\sqrt{2}}{2}$ , sign1=1, sign2=j; and when the constellation point of the first modulation bit sequence $b_0(i)$, $b_0(i+1)$ is $s_1 = \frac{\sqrt{2}}{2} - j\frac{\sqrt{2}}{2}$ , sign1=-1, sign2=j;

$$sign1=sign3(sign(real(s_1)))$$

$$sign2=j \times sign3(sign(imag(s_1))),$$

wherein sign() denotes a sign function, sign3() denotes an inverse function of the sign function.

8. The device of claim 7, wherein when sign1=1 and sign2=j, a constellation point in a third quadrant of the combined constellation x is $x_1 = c((I - d) + j(Q-d))$.

9. The device of claim 7, wherein when modulation of the first modulation bit sequence is QPSK, and sign1 = $e^{j\varphi 0\pi}$ and sign2 = $e^{j(\varphi 1+1/2)\pi}$, $\varphi_0$ $\varphi_1$ and $b_0(i)$, $b_0(i+1)$ meet the following formulas:

$$\varphi_0=1-b_0(i)$$

$$\varphi_1=1-b_0(i+1).$$

10. The device of claim 7, wherein when n=1 and a transmission power ratio is 8/10, c is $\sqrt{1/5}$ and d is $\sqrt{2}$ ; when n=1 and the transmission power ratio is 50/58, c is $2/\sqrt{29}$ and d is $5/2\sqrt{2}$ ; when n=1 and the transmission power ratio is 264.5/289, c is $7\sqrt{1/578}$ and d is $23/7\sqrt{2}$ .

11. The device of claim 7, wherein when n=3 and a transmission power ratio is 32/42, c is $\sqrt{5/21}$ and d is $2\sqrt{2/5}$ ; when n=3 and the transmission power ratio is 144.5/167, c is $3\sqrt{5/334}$ and d is $17/(3\sqrt{10})$ .

12. The device of claim 7, wherein when n=5 and a transmission power ratio is 128/170, c is $\sqrt{21/85}$ and d is $4\sqrt{2/21}$ ; when n=5 and the transmission power ratio is 40.5/51, c is $\sqrt{7/34}$ and d is $3\sqrt{3/14}$ ; when n=5 and the transmission power ratio is 288/330, c is $\sqrt{7/55}$ and d is $2\sqrt{6/7}$ .

13. A transmitter comprising a modulator, wherein the modulator is configured to modulate data to be transmitted according to the method for generating a jointly modulated symbol of any one of claims 1 to 6.

**Patentansprüche**

1. Verfahren zum Erzeugen eines gemeinsam modulierten Symbols, das von einer Vorrichtung durchgeführt wird und Folgendes umfasst:

gemeinsames Modulieren und Zuordnen einer ersten Modulationsbitsequenz $b_0(i)$, $b_0(i+1)$ und einer zweiten Modulationsbitsequenz $b_1(i)$, $b_1(i+1)$, ...$b_1(i+n)$, die insgesamt m Bits sind, um eine kombinierte Konstellation x zu erhalten, wobei i eine natürliche Zahl ist, n $\in$ {1,3,5}, m $\in$ {4,6,8};
wobei die kombinierte Konstellation x gemäß der folgenden Formel erhalten wird:

$$x=sign1 \times c(I-d)+sign2 \times c(Q-d);$$

wobei c und d Parameter sind, die eine Leistungszuteilung der ersten Modulationsbitsequenz und der zweiten Modulationsbitsequenz in der kombinierten Konstellation x sind; I und Q Koordinaten eines Konstellationspunkts der zweiten Modulationsbitsequenz $b_1(i)$, $b_1(0+1)$, ...$b_1(i+n)$ sind; und
wobei sign1 und sign2 durch die erste Modulationsbitsequenz $b_0(i)$, $b_0(i+1)$ erhalten werden, wenn die erste Modulationsbitsequenz $b_0(i)$, $b_0(i+1)$ 00 ist, sign1=-1 und sign2=-j; wenn die erste Modulationsbitsequenz $b_0(i)$,

$b_0(i+1)$ 10 ist, sign1=1 und sign2=-j; wenn die erste Modulationsbitsequenz $b_0(i)$, $b_0(i+1)$ 01 ist, sign1=-1 und sign2=j; und wenn die erste Modulationsbitsequenz $b_0(i)$, $b_0(i+1)$ 11 ist, sign1=1 und sign2=j;

$$sign1 = (-1)^{(1-b_0(i))}$$

$$sign2 = j \times (-1)^{(1-b_0(i+1))};$$

oder sign1 und sign2 werden durch ein Quadraturphasenumtastungs(QPSK)-Symbol erhalten, das von der ersten Modulationsbitsequenz $b_0(i)$, $b_0(i+1)$ zugeordnet wird, wobei eine Modulation der ersten Modulationsbitsequenz QPSK ist, wenn ein Konstellationspunkt der ersten Modulationsbitsequenz $b_0(i)$, $b_0(i+1)$

$$s1 = \sqrt{\frac{\sqrt{2}}{2}} + j\sqrt{\frac{\sqrt{2}}{2}}$$

ist, sign1=-1, sign2=-j; wenn der Konstellationspunkt der ersten Modulationsbitsequenz $b_0(i)$, $b_0(i+1)$

$$s1 = -\sqrt{\frac{\sqrt{2}}{2}} + j\sqrt{\frac{\sqrt{2}}{2}}$$

ist, sign1=1, sign2=-j; wenn der Konstellationspunkt der ersten Modula-tionsbitsequenz $b_0(i)$, $b_0(i+1)$

$$s1 = -\sqrt{\frac{\sqrt{2}}{2}} - j\sqrt{\frac{\sqrt{2}}{2}}$$

ist, sign1=1, sign2=j; und wenn der Konstellationspunkt der ersten Modulationsbitsequenz $b_0(i)$, $b_0(i+1)$

$$s1 = \sqrt{\frac{\sqrt{2}}{2}} - j\sqrt{\frac{\sqrt{2}}{2}}$$

ist, sign1=-1, sign2=j;

$$sign1=sign3(sign(real(s_1)))$$

$$sign2=jxsign3(sign(imag(s_1))),$$

wobei sign() eine Vorzeichenfunktion kennzeichnet, sign3() eine Umkehrfunktion der Vorzeichenfunktion kennzeichnet.

2. Verfahren nach Anspruch 1, wobei, wenn sign1=1 und sign2=j, ein Konstellationspunkt $x_1$ in einem dritten Qua-dranten der kombinierten Konstellation x ist, berechnet nach der folgenden Formel: $x_1$= c((I-d)+j(Q-d)).

3. Verfahren nach Anspruch 1, wobei, wenn eine Modulation der ersten Modulationsbitsequenz QPSK ist und sign1 = $e^{j\varphi_0\pi}$ und sign2 = $e^{j(\varphi_1+1/2)\pi}$, $\varphi_0$, $\varphi_1$ und $b_0(i)$, $b_0(i+1)$ die folgenden Formeln erfüllen:

$$\varphi0=1-b_0(i)$$

$$\varphi1=1-b_0(i+1).$$

4. Verfahren nach Anspruch 1, wobei, wenn n=1 und ein Übertragungsleistungsverhältnis 8/10 ist, c $\sqrt{1/5}$ ist und d $\sqrt{2}$ ist; wenn n=1 und das Übertragungsleistungsverhältnis 50/58 ist, c $2/\sqrt{29}29$ ist und d $5/2\sqrt{2}$ ist; wenn n=1 und das Übertragungsleistungsverhältnis 264,5/289 ist, c $7/\sqrt{1/578}$ ist und d $23/(7\sqrt{2})$ ist.

5. Verfahren nach Anspruch 1, wobei, wenn n=3 und ein Übertragungsleistungsverhältnis 32/42 ist, c $\sqrt{5/21}$ ist und d $2\sqrt{2/5}$ ist; wenn n=3 und das Übertragungsleistungsverhältnis 144,5/167 ist, c $3\sqrt{5/334}$ ist und d $17/(3\sqrt{10})$ ist; wenn n=3 und das Übertragungsleistungsverhältnis 128/138 ist, c $\sqrt{5/69}$ ist und d $4\sqrt{2/5}$ ist.

**6.**

Verfahren nach Anspruch 1, wobei, wenn n=5 und ein Übertragungsleistungsverhältnis 128/170 ist, c $\sqrt{21/85}$ ist und d $\sqrt[4]{2/21}$ ist; wenn n=5 und das Übertragungsleistungsverhältnis 40,5/51 ist, $c\sqrt{7/34}$ ist und d $\sqrt[3]{3/14}$ ist; wenn n=5 und das Übertragungsleistungsverhältnis 288/330 ist, $c\sqrt{7/55}$ ist und d $\sqrt[2]{6/7}$ ist.

**7.** Vorrichtung zum Erzeugen eines gemeinsam modulierten Symbols, die Folgendes umfasst:

eine Modulationseinheit (50), die dazu ausgelegt ist, eine erste Modulationsbitsequenz $b_0(i)$, $b_0(i+1)$ und eine zweite Modulationsbitsequenz $b_1(i)$, $b_1(i+1)$,...$b_1(i+n)$, die insgesamt m Bits sind, gemeinsam zu modulieren und zuzuordnen, um eine kombinierte Konstellation x zu erhalten, wobei i eine natürliche Zahl ist, $n \in \{1,3,5\}$, $m \in \{4,6,8\}$;
eine Konstellationspunkterzeugungseinheit (51), die dazu ausgelegt ist, Konstellation x zu synthetisieren, wobei *x=sign*1$\times$*c(I-d)+sign*2$\times$*c(Q-d)*;
wobei c und d Parameter sind, die eine Leistungszuteilung der ersten Modulationsbitsequenz und der zweiten Modulationsbitsequenz in der kombinierten Konstellation x sind; I und Q Koordinaten eines Konstellationspunkts der zweiten Modulationsbitsequenz $b_1(i)$, $b_1(i+1)$,...$b_1(i+n)$ sind; und
wobei sign1 und sign2 durch die erste Modulationsbitsequenz $b_0(i)$, $b_0(i+1)$ erhalten werden, wenn die erste Modulationsbitsequenz $b_0(i)$, $b_0(i+1)$ 00 ist, sign1=-1 und sign2=-j; wenn die erste Modulationsbitsequenz $b_0(i)$, $b_0(i+1)$ 10 ist, sign1=1 und sign2=-j; wenn die erste Modulationsbitsequenz $b_0(i)$, $b_0(i+1)$ 01 ist, sign1=-1 und sign2=j; und wenn die erste Modulationsbitsequenz $b_0(i)$, $b_0(i+1)$ 11 ist, sign1=1 und sign2=j;

$$sign1 = (-1)^{(1-b_0(i))}$$

$$sign2 = j \times (-1)^{(1-b_0(i+1))};$$

oder sign1 und sign2 werden durch ein Quadraturphasenumtastungs(QPSK)-Symbol erhalten, das von der ersten Modulationsbitsequenz $b_0(i)$, $b_0(i+1)$ zugeordnet wird, wobei eine Modulation der ersten Modulationsbitsequenz QPSK ist, wenn ein Konstellationspunkt der ersten Modulationsbitsequenz $b_0(i)$, $b_0(i+1)$

$s1 = \sqrt{\frac{\sqrt{2}}{2}} + j\sqrt{\frac{\sqrt{2}}{2}}$ ist, sign1=-1, sign2=-j; wenn der Konstellationspunkt der ersten Modulationsbitsequenz $b_0(i)$, $b_0(i+1)$ $s1 = -\sqrt{\frac{\sqrt{2}}{2}} + j\sqrt{\frac{\sqrt{2}}{2}}$ ist, sign1=1, sign2=-j; wenn der Konstellationspunkt der ersten Modula-tionsbitsequenz $b_0(i)$, $b_0(i+1)$ $s1 = -\sqrt{\frac{\sqrt{2}}{2}} - j\sqrt{\frac{\sqrt{2}}{2}}$ ist, sign1=1, sign2=j; und wenn der Konstellationspunkt der ersten Modulationsbitsequenz $b_0(i)$, $b_0(i+1)$ $s1 = \sqrt{\frac{\sqrt{2}}{2}} - j\sqrt{\frac{\sqrt{2}}{2}}$ ist, sign1=-1, sign2=j;

$$sign1=sign3(sign(real(s_1)))$$

$$sign2=j \times sign3(sign(imag(s_1))),$$

wobei sign() eine Vorzeichenfunktion kennzeichnet, sign3() eine Umkehrfunktion der Vorzeichenfunktion kennzeichnet.

**8.** Vorrichtung nach Anspruch 7, wobei, wenn sign1=1 und sign2=j, ein Konstellationspunkt in einem dritten Quadrant der kombinierten Konstellation x $x_1=c((I-d) + j (Q-d))$ ist.

**9.** Vorrichtung nach Anspruch 7, wobei, wenn eine Modulation der ersten Modulationsbitsequenz QPSK ist und sign1 $= e^{j\varphi_0\pi}$ und sign2 $= e^{j(\varphi_1+1/2)\pi}$, $\varphi_0$, $\varphi_1$ und $b_0(i)$, $b_0(i+1)$ die folgenden Formeln erfüllen:

$$\varphi 0 = 1 - b_0(i)$$

$$\varphi 1 = 1 - b_0(i+1).$$

**10.** Vorrichtung nach Anspruch 7, wobei, wenn n=1 und ein Übertragungsleistungsverhältnis 8/10 ist, c $\sqrt{1/5}$ ist und d $\sqrt{2}$ ist; wenn n=1 und das Übertragungsleistungsverhältnis 50/58 ist, c $2/\sqrt{29}$ ist und d $5/2\sqrt{2}$ ist; wenn n=1 und das Übertragungsleistungsverhältnis 264,5/289 ist, c $7\sqrt{1/578}$ ist und d $23/7\sqrt{2}$ ist.

**11.** Vorrichtung nach Anspruch 7, wobei, wenn n=3 und ein Übertragungsleistungsverhältnis 32/42 ist, c $\sqrt{5/21}$ ist und d $2\sqrt{2/5}$ ist; wenn n=3 und das Übertragungsleistungsverhältnis 144,5/167 ist, c $3\sqrt{5/334}$ ist und d $17/(3\sqrt{10})$ ist.

**12.** Vorrichtung nach Anspruch 7, wobei, wenn n=5 und ein Übertragungsleistungsverhältnis 128/170 ist, c $\sqrt{21/85}$ ist und d $4\sqrt{2/21}$ ist; wenn n=5 und das Übertragungsleistungsverhältnis 40,5/51 ist, c $\sqrt{7/34}$ ist und d $3\sqrt{3/14}$ ist; wenn n=5 und das Übertragungsleistungsverhältnis 288/330 ist, c $\sqrt{7/55}$ ist und d $2\sqrt{6/7}$ ist.

**13.** Sender, der einen Modulator umfasst, wobei der Modulator dazu ausgelegt ist, zu übertragende Daten gemäß dem Verfahren zum Erzeugen eines gemeinsam modulierten Symbols nach einem der Ansprüche 1 bis 6 zu modulieren.

**Revendications**

**1.** Procédé de génération d'un symbole modulé conjointement, réalisé par un dispositif, comprenant de :

moduler et mapper conjointement une première séquence de bits de modulation $b_0(i)$, $b_0(i+1)$ et une deuxième séquence de bits de modulation $b_1(i)$, $b_1(i+1)$, ... $b_1(i+n)$, qui sont m bits au total, pour obtenir une constellation combinée x, où i est un entier naturel, n E {1, 3, 5}, m $\in$ {4, 6, 8} ;
dans lequel la constellation combinée x est obtenue selon la formule suivante :

$$x = sign1 \times c(I - d) + sign2 \times c(Q - d) \ ;$$

où c et d sont des paramètres liés à l'attribution de puissance de la première séquence de bits de modulation et de la deuxième séquence de bits de modulation dans la constellation combinée x ; I et Q sont des coordonnées d'un point de constellation de la deuxième séquence de bits de modulation $b_1(i)$, $b_1(i+1)$, ... $b_1(i+n)$ ; et
où sign1 et sign2 sont obtenus par la première séquence de bits de modulation $b_0(i)$, $b_0(i+1)$, lorsque la première séquence de bits de modulation $b_0(i)$, $b_0(i+1)$ est 00, sign1 = -1 et sign2 = -j ; lorsque la première séquence de bits de modulation $b_0(i)$, $b_0(i+1)$ est 10, sign1 = 1 et sign2 = -j ; lorsque la première séquence de bits de modulation $b_0(i)$, $b_0(i+1)$ est 01, sign1 = -1 et sign2 = j ; et lorsque la première séquence de bits de modulation $b_0(i)$, $b_0(i+1)$ est 11, sign1 = 1 et sign2 = j ;

$$sign1 = (-1)^{(1-b_0(i))}$$

$$sign2 = j \times (-1)^{(1-b_0(i+1))} \ ;$$

ou, sign1 et sign2 sont obtenus par un symbole de modulation par déplacement de phase en quadrature, MDPQ, mappé par la première séquence de bits de modulation $b_0(i)$, $b_0(i+1)$, où la modulation de la première séquence de bits de modulation est MDPQ, lorsqu'un point de constellation de la première séquence de bits de modulation $b_0(i)$, $b_0(i+1)$ est $s_1 = \frac{\sqrt{2}}{2} + j\frac{\sqrt{2}}{2}$ , sign1 = -1, sign2 = -j ; lorsque le point de constellation de la première séquence de bits de modulation $b_0(i)$, $b_0(i+1)$ est $s_1 = -\frac{\sqrt{2}}{2} + j\frac{\sqrt{2}}{2}$, sign1 = 1, sign2 = -j ; lorsque le point de constellation de la première séquence de bits de modulation $b_0(i)$, $b_0(i+1)$ est $s_1 = -\frac{\sqrt{2}}{2} - j\frac{\sqrt{2}}{2}$, sign1 = 1, sign2 = j ; et lorsque le point de constellation de la première séquence de bits de modulation $b_0(i)$, $b_0(i+1)$ est $s_1 = \frac{\sqrt{2}}{2} - j\frac{\sqrt{2}}{2}$, sign1 = -1, sign2 = j ;

$$sign1 = sign3\left(sign(real(s_1))\right)$$

$$sign2 = j \times sign3\left(sign(imag(s_1))\right),$$

où sign() désigne une fonction de signe, sign3() désigne une fonction inverse de la fonction de signe.

2. Procédé selon la revendication 1, dans lequel lorsque sign1 = 1 et sign2 = j, un point de constellation $x_1$ dans un troisième quadrant de la constellation combinée x est calculé selon la formule suivante : $x_1 = c((I - d) + j(Q - d))$.

3. Procédé selon la revendication 1, dans lequel lorsque la modulation de la première séquence de bits de modulation est MDPQ et $sign1 = e^{j\varphi_0\pi}$ et $sign2 = e^{j(\varphi_1+1/2)\pi}$, $\varphi_0$, $\varphi_1$ et $b_0(i)$, $b_0(i+1)$ répondent aux formules suivantes :

$$\varphi_0 = 1 - b_0(i)$$

$$\varphi_1 = 1 - b_0(i + 1).$$

4. Procédé selon la revendication 1, dans lequel lorsque n = 1 et qu'un rapport de puissance de transmission est 8/10, c'est $\sqrt{1/5}$ et d est $\sqrt{2}$ ; lorsque n = 1 et que le rapport de puissance de transmission est 50/58, c est $2/\sqrt{29}$ et d est $5/2\sqrt{2}$ ; lorsque n = 1 et que le rapport de puissance de transmission est 264,5/289, c est $7\sqrt{1/578}$ et d est $23/(7\sqrt{2})$ .

5. Procédé selon la revendication 1, dans lequel lorsque n = 3 et qu'un rapport de puissance de transmission est 32/42, c est $\sqrt{5/21}$ et d est $2\sqrt{2/5}$ ; lorsque n = 3 et que le rapport de puissance de transmission est 144,5/167, c est $3\sqrt{5/334}$ et d est $17/(3\sqrt{10})$ ; lorsque n = 3 et que le rapport de puissance de transmission est 128/138, c est $\sqrt{5/69}$ et d est $4\sqrt{2/5}$ .

6. Procédé selon la revendication 1, dans lequel lorsque n = 5 et qu'un rapport de puissance de transmission est 128/170, c est $\sqrt{21/85}$ et d est $4\sqrt{2/21}$ ; lorsque n = 5 et que le rapport de puissance de transmission est 40,5/51, c est $\sqrt{7/34}$ et d est $3\sqrt{3/14}$ ; lorsque n = 5 et que le rapport de puissance de transmission est 288/330, c est $\sqrt{7/55}$ et d est $2\sqrt{6/7}$ .

7. Dispositif pour générer un symbole modulé conjointement, comprenant :

une unité de modulation (50), configurée pour moduler et mapper conjointement une première séquence de bits de modulation $b_0(i)$, $b_0(i+1)$ et une deuxième séquence de bits de modulation $b_1(i)$, $b_1(i+1)$, ... $b_1(i+n)$, qui sont m bits au total, pour obtenir une constellation combinée x, où i est un entier naturel, $n \in \{1, 3, 5\}$, $m \in \{4, 6, 8\}$ ;
une unité de génération de points de constellation (51), configurée pour synthétiser une constellation x, où $x = sign1 \times c(I - d) + sign2 \times c(Q - d)$ ;
où c et d sont des paramètres liés à l'attribution de puissance de la première séquence de bits de modulation et de la deuxième séquence de bits de modulation dans la constellation combinée x ; I et Q sont des coordonnées d'un point de constellation de la deuxième séquence de bits de modulation $b_1(i)$, $b_1(i+1)$, ... $b_1(i+n)$ ; et
où sign1 et sign2 sont obtenus par la première séquence de bits de modulation $b_0(i)$, $b_0(i+1)$, lorsque la première séquence de bits de modulation $b_0(i)$, $b_0(i+1)$ est 00, sign1 = -1 et sign2 = -j ; lorsque la première séquence de bits de modulation $b_0(i)$, $b_0(i+1)$ est 10, sign1 = 1 et sign2 = -j ; lorsque la première séquence de bits de modulation $b_0(i)$, $b_0(i+1)$ est 01, sign1 = -1 et sign2 = j ; et lorsque la première séquence de bits de modulation $b_0(i)$, $b_0(i+1)$ est 11, sign1 = 1 et sign2 = j ;

$$sign1 = (-1)^{(1-b_0(i))}$$

$$sign2 = j \times (-1)^{(1-b_0(i+1))} \, ;$$

ou, sign1 et sign2 sont obtenus par un symbole de modulation par déplacement de phase en quadrature, MDPQ, mappé par la première séquence de bits de modulation $b_0(i)$, $b_0(i+1)$, où la modulation de la première séquence de bits de modulation est MDPQ, lorsqu'un point de constellation de la première séquence de bits de modulation $b_0(i)$, $b_0(i+1)$ est $s_1 = \frac{\sqrt{2}}{2} + j\frac{\sqrt{2}}{2}$ , sign1 = -1, sign2 = -j ; lorsque le point de constellation de la première séquence de bits de modulation $b_0(i)$, $b_0(i+1)$ est $s_1 = -\frac{\sqrt{2}}{2} + j\frac{\sqrt{2}}{2}$ , sign1 = 1, sign2 = -j ; lorsque le point de constellation de la première séquence de bits de modulation $b_0(i)$, $b_0(i+1)$ est $s_1 = -\frac{\sqrt{2}}{2} - j\frac{\sqrt{2}}{2}$ , sign1 = 1, sign2 = j ; et lorsque le point de constellation de la première séquence de bits de modulation $b_0(i)$, $b_0(i+1)$ est $s_1 = \frac{\sqrt{2}}{2} - j\frac{\sqrt{2}}{2}$ , sign1 = -1, sign2 = j ;

$$sign1 = sign3\left(sign(real(s_1))\right)$$

$$sign2 = j \times sign3\left(sign(imag(s_1))\right),$$

où sign() désigne une fonction de signe, sign3() désigne une fonction inverse de la fonction de signe.

8. Dispositif selon la revendication 7, dans lequel lorsque sign1 = 1 et sign2 = j, un point de constellation dans un troisième quadrant de la constellation combinée x est $x_1 = c((I - d) + j(Q - d))$.

**9.** Dispositif selon la revendication 7, dans lequel lorsque la modulation de la première séquence de bits de modulation est MDPQ et $sign1 = e^{j\varphi_0\pi}$ et $sign2 = e^{j(\varphi_1+1/2)\pi}$, $\varphi_0$, $\varphi_1$ et $b_0(i)$, $b_0(i+1)$ répondent aux formules suivantes :

$$\varphi_0 = 1 - b_0(i)$$

$$\varphi_1 = 1 - b_0(i+1) \,.$$

**10.** Dispositif selon la revendication 7, dans lequel lorsque n = 1 et qu'un rapport de puissance de transmission est 8/10, c'est $\sqrt{1/5}$ et d est $\sqrt{2}$ ; lorsque n = 1 et que le rapport de puissance de transmission est 50/58, c est $2/\sqrt{29}$ et d est $5/2\sqrt{2}$ ; lorsque n = 1 et que le rapport de puissance de transmission est 264,5/289, c est $7\sqrt{1/578}$ et d est $23/(7\sqrt{2})$ .

**11.** Dispositif selon la revendication 7, dans lequel lorsque n = 3 et qu'un rapport de puissance de transmission est 32/42, c est et d est $2\sqrt{2/5}$ ; lorsque n = 3 et que le rapport de puissance de transmission est 144,5/167, c est $3\sqrt{5/334}$ et d est $17/(3\sqrt{10})$ .

**12.** Dispositif selon la revendication 7, dans lequel lorsque n = 5 et qu'un rapport de puissance de transmission est 128/170, c est $\sqrt{21/85}$ et d est $4\sqrt{2/21}$ ; lorsque n = 5 et que le rapport de puissance de transmission est 40,5/51, c est $\sqrt{7/34}$ et d est $3\sqrt{3/14}$ ; lorsque n = 5 et que le rapport de puissance de transmission est 288/330, c est $\sqrt{7/55}$ et d est $2\sqrt{6/7}$ .

**13.** Émetteur comprenant un modulateur, dans lequel le modulateur est configuré pour moduler des données à transmettre selon le procédé de génération d'un symbole modulé conjointement de l'une quelconque des revendications 1 à 6.

First modulation bit sequence b₀(i), b₀(i+1)

Second modulation bit sequence b₁(i), b₁(i+1),···b₁(i+n)

Joint modulation

Jointly modulated symbol

Jointly modulated symbol forms a combined constellation

Power allocation factor (power scale factor)
Relevant parameters c and d

**FIG. 1**

First modulation bit sequence b₀(i), b₀(i+1)

Second modulation bit sequence b₁(i), b₁(i+1),···b₁(i+n)

LTE QAM

Modulation symbol
I+jQ

Joint modulation

Jointly modulated symbol

Jointly modulated symbol forms a combined constellation

Power allocation factor (power scale factor)
Relevant parameters c and d

**FIG. 2**

First modulation bit sequence b₀(i), b₀(i+1)

Second modulation bit sequence b₁(i), b₁(i+1),···b₁(i+n)

sign1,sign2 conversion

sign1, sign2

LTE QAM

Modulation symbol
I+jQ

Joint modulation

Jointly modulated symbol

Jointly modulated symbol forms a combined constellation

Power allocation factor (power scale factor)
Relevant parameters c and d

**FIG. 3**

First modulation bit sequence $b_0(i)$, $b_0(i+1)$ → sign1,sign2 conversion → Modulation symbol

Second modulation bit sequence $b_1(i)$, $b_1(i+1)$,···$b_1(i+n)$ → LTE QAM → Modulation symbol $I+jQ$

Power allocation factor (power scale factor) Relevant parameters c and d

$e^{j\varphi_0\pi}$  $e^{j(\varphi_1-1/2)\pi}$

Joint modulation → Jointly modulated symbol

Jointly modulated symbol forms a combined constellation.

## FIG. 4

Modulation unit 50

Constellation point generation unit 51

## FIG. 5

**EP 3 541 034 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ERICSSON.** Introduction of MUST. *3GPP DRAFT,* 13 November 2016

- **NOKIA ; ALCATEL-LUCENT ; SHANGHAI BELL.** On remaining details of MUST Case 1 and 2. *3GPP DRAFT,* 13 November 2016